(19) Europäisches Patentamt
European Patent Office
Office européen des brevets

(11) EP 2 948 000 B1

(12) **EUROPEAN PATENT SPECIFICATION**

(45) Date of publication and mention of the grant of the patent:
**16.11.2016 Bulletin 2016/46**

(21) Application number: **14701382.5**

(22) Date of filing: **24.01.2014**

(51) Int Cl.:
***A23J 1/04*** *(2006.01)* ***A23J 3/34*** *(2006.01)*
***A23K 40/20*** *(2016.01)* ***A23K 20/147*** *(2016.01)*
***A23K 50/80*** *(2016.01)* ***A23K 40/30*** *(2016.01)*
***A23K 10/22*** *(2016.01)* ***A23K 20/142*** *(2016.01)*

(86) International application number:
**PCT/EP2014/051435**

(87) International publication number:
**WO 2014/114767 (31.07.2014 Gazette 2014/31)**

(54) **CRUSTACEAN PROTEIN HYDROLYSATES FOR MAINTAINING AND/OR PROMOTING BOWEL HEALTH OF CULTURED FISH**

KRUSTENTIERPROTEINHYDROLYSATE ZUM ERHALTEN UND/ODER FÖRDERN DER DARMGESUNDHEIT VON GEZÜCHTETEM FISCH

HYDROLYSATS DE PROTÉINES DE CRUSTACÉS POUR MAINTENIR ET/OU PROMOUVOIR LA SANTÉ INTESTINALE DES POISSONS D'ÉLEVAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2013 EP 13305083**

(43) Date of publication of application:
**02.12.2015 Bulletin 2015/49**

(73) Proprietor: **Spécialités Pet Food**
**56250 Elven (FR)**

(72) Inventor: **FOURNIER, Vincent**
**F-56230 Questembert (FR)**

(74) Representative: **Regimbeau**
**20, rue de Chazelles**
**75847 Paris Cedex 17 (FR)**

(56) References cited:
**WO-A2-2012/049430 US-A1- 2006 099 305**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to the field of aquaculture, more particularly fish feed in aquaculture.

More precisely, the invention concerns the use of one or more crustacean protein hydrolysates as a feed ingredient for maintaining and/or promoting bowel health of cultured post-larval fish.

## BACKGROUND OF THE INVENTION

Farmers and manufacturers working in the aquaculture field are facing a major concern due to the fact that availability of marine raw materials is expected to decrease in the coming years when aquaculture is expanded more and more.

In particular, availability on the world market of fish meal and fish oil - which were used to serve as the dominant protein source in dry feed for fish - is dramatically decreasing and prices rise considerably for these raw materials. As a consequence, the aquaculture industry, especially the fish feed industry, has predicted for several years that there will be a shortage of both fish meal and fish oil in the future.

Clearly, the dietary level of fish meal remains crucial for achieving feed performance, affecting both feed palatability and feed utilization. Thus, for the last 20 years, the fish feed industry has become more and more interested in finding satisfying alternatives to fish meal and fish oil to be used for feeding cultured fish given that, year after year, the level of fish meal in feed designed for carnivorous fish species tends to decrease and is close to reach a critical threshold for fish growth and feed utilization.

Alternative animal protein sources can be used for dry fish feed. For instance, it is known to use land-based raw materials (e.g., blood meal, bone meal, feather meal, and other types of meal produced from other slaughterhouse waste, for example poultry meal), as well as plant-based raw materials (e.g., soy meal, wheat meal, rapeseed meal, rice meal, and the like). These are typically cheaper and more available than fish meal and fish oil. As a result, plant- and land-based feedstuffs are now commonly proposed in fish feed formulations as an alternative to fish meal.

However, on the one hand, balancing the dietary amino acid profile of plant-rich diets to meet the fish amino acid requirements is not efficient enough to get satisfying fish and feed performances. And, on the other hand, in some geographic regions, including Europe, there has been a prohibition against using land-based raw materials in the production of feeds for food-producing animals and fish.

In such a context of low fish meal availability and price volatility, it is essential to find solutions for compensating for the lower fish meal content of current fish diets. As mentioned above, plant-based raw materials are often used to replace fish meal in feed formula for cultured fish and shrimps. However, introduction of plant protein in the diet of carnivorous fish is known to affect negatively the fish intestine quality by causing damage to the intestine epithelium (Krogdahl et al., 2003). This results in diarrhea and, hence, in poor utilization of nutrients and in weakening fish which become more susceptible to pathogen. When imbalanced diets or low fish meal diets are used, one often observes skinny fish which refuse to eat and do not grow all over the trial.

There is thus a need in the art for fish feed ingredients having highly specific dietary properties in order to satisfy cultured fish requirements and to overcome the adverse effects on fish health of diets containing low fish meal and/or plant-based materials.

The present Inventors have hypothesized that particular crustacean hydrolysates could satisfy this need in the art by enhancing the performance of low fish meal feed through improvement of feed palatability and of nutrient absorption capacities of fish.

Protein hydrolysates are recognized in the field of animal nutrition as relevant raw materials to improve feed and animal performances. Hydrolysates are also being recognized in human sport nutrition. The positive impact of enzymatic hydrolysis on protein digestibility has been demonstrated since some decades. The pre-digestion of raw material protein by endogenous or exogenous enzymes is able to release highly available peptides and free amino acids that could pass very quickly the intestinal barrier to the systemic circulation (Koopman et al., 2009). Thus, enzymatic hydrolysis will limit the risk of protein denaturation during the raw material processing (drying) and improve the protein digestibility.

Several studies have investigated the positive impact of dietary hydrolyzed protein on the growth of several fish species (goldfish, atlantic salmon, turbot, tilapia, pacu japanese seabass, european seabass, etc. (see Taheri et al., 2010 for references). In comparison to a non-hydrolyzed raw material (e.g., fish meal), fish hydrolysate generally showed a beneficial effect on growth and feed utilisation due to a higher palatability and digestibility.

Inclusion of protein hydrolysates is also recognized as an efficient strategy to improve the digestibility and nutritional value of diets formulated for larval fish (Kolkovski, 2008). Hydrolysates can provide highly bioavailable compounds (in particular, peptides and free amino acids) to larvae, characterized by a non mature digestive system, and can improve the digestive system development (Cahu et al., 1999).

However, larvae have specificities that make them different from "post-larval" fish (i.e., fish in a post-larval stage of development / growing), not only physically but also physiologically. In particular, according to Kendall et al. (1984), larval stage - covering the period from hatching to attainment of complete fin rays and beginning of squamation (apparition of fish scales) - is characterized by change in body shape, change in locomotive ability and feeding techniques. Moreover, from hatching, larval stage is characterized by a rudimentary gut, with limited capacity of macro-nutrients digestion, then developing to a mature digestive system when going to juvenile stage (Zambonino and Cahu, 2001). Post-larval stage is starting from the juvenile stage, from completion of fin rays counts and beginning of squamation, up to (and encompassing) when fish enters adult population or attains sexual maturity (Kendall et al., 1984) and when fish is characterized by the presence of an efficient digestive system, representing the adult mode of digestion (Zambonino and Cahu, 2001)

It is herein shown for the first time a benefit of particular crustacean protein hydrolysates for maintaining and/or promoting bowel health of cultured post-larval fish, especially for improving intestine epithelium development in said cultured post-larval fish.

## SUMMARY OF THE INVENTION

The present invention concerns a feed ingredient made of one or more crustacean protein hydrolysates for use in a method for maintaining and/or promoting bowel health of cultured post-larval fish.

## BRIEF DESCRIPTION OF THE FIGURES

Figure 1. Specifications of the crustacean protein hydrolysate (CRUS HYD) and of the white fish hydrolysate (White fish HYD) used in the reported trial. Content in crude protein, soluble protein, and free amino acid is expressed as % of the hydrolysate. The peptide molecular weight profile is determined in % of the soluble proteins present in the hydrolysate.

Figure 2. Specific growth rate (SGR) of European seabass fed with dietary treatments for 56 days. CRUS HYD: crustacean protein hydrolysate; White fish HYD: white fish hydrolysate; FM5: fish diet containing 5% of fish meal; FM20: fish diet containing 20% of fish meal.

Figure 3. Feed conversion ratio (FCR) in European seabass fed with dietary treatments for 56 days. CRUS HYD: crustacean protein hydrolysate; White fish HYD: white fish hydrolysate; FM5: fish diet containing 5% of fish meal; FM20: fish diet containing 20% of fish meal.

Figure 4. Method for calculating the internal diameter (ID) / external diameter (ED) ratio of mid intestine histological section.

Figure 5. ID/ED ratio of mid-intestine sampled in European seabass fed dietary treatments for 56 days. DH: degree of hydrolysis; FM5: fish diet containing 5% of fish meal; FM20: fish diet containing 20% of fish meal.

Figure 5bis. Histological section of mi-intestine from fish fed FM5 diet (A) and fish fed FM5 + 5% crustacean protein hydrolysate (B).

Figure 6. Comparative analysis of the beta-actin gene expression between fishes of the FM5 (=fish diet containing 5% of fish meal), FM20 (=fish diet containing 20% of fish meal), and FM5 + 5% crustacean protein hydrolysate feed treatments. Data are referred to the mean values from 15 fishes for each treatment. Comparative analysis of the act mRNA amount of target (along the three intestine segments), in terms of the $2^{-\Delta CT}$ values (Y axis) (**P<0,01, (*P<0,05; ONE-WAY ANOVA). Pyl_ca: pyloric caeca; mid: proximal intestine; dist: distal intestine.

Figure 7. Protein quality of fish meal, crustacean protein hydrolysate (CRUS HYD), and white fish hydrolysate (white fish HYD). Content in crude protein, soluble protein, and free amino acid is expressed as % of the hydrolysate. The peptide molecular weight profile is determined in % of the soluble proteins present in the hydrolysate.

Figure 8. Amino acid profile of fish meal, crustacean protein hydrolysate (CRUS HYD), and white fish hydrolysate (white fish HYD) (% of the product).

Figure 9. Iso-curves responses for specific growth rate (SGR) in European seabass fed with diets including crustacean protein hydrolysate (CRUS HYD) for 47 days.

Figure 10. Iso-curves responses for feed conversion ratio (FCR) in European seabass fed with diets including crustacean protein hydrolysate (CRUS HYD) for 47 days.

Figure 11. Iso-curves responses for specific growth rate (SGR) in European seabass fed with diets including white fish hydrolysate (white fish HYD) for 47 days.

Figure 12. Iso-curves responses for feed conversion ratio (FCR) in European seabass fed with diets including white fish hydrolysate (white fish HYD) for 47 days.

Figure 13. Specific growth rate (SGR) of European seabass fed with dietary treatments for 45 days (C: coating; I: inclusion; Crust Hyd: crustacean protein hydrolysate; FM5: fish diet containing 5% of fish meal; FM20: fish diet containing 20% of fish meal).

Figure 14. Feed conversion ratio (FCR) in European seabass fed with dietary treatments for 45 days (C: coating; I: inclusion; Crust Hyd: crustacean protein hydrolysate; FM5: fish diet containing 5% of fish meal; FM20: fish diet containing 20% of fish meal).

Figure 15. Proportion of skinny fish in European seabass fed with dietary treatments for 45 days (C: coating; I: inclusion; Crust Hyd: crustacean protein hydrolysate; FM5: fish diet containing 5% of fish meal; FM20: fish diet containing 20% of fish meal).

Figure 16. Survival of olive flounder (*Paralichthys olivaceus*) fed with dietary treatments and then challenged with *Streptococcus iniae* for 60 days (Crust Hyd: crustacean protein hydrolysate).

Figure 17. Survival of red seabream (*Pagrus major*) fed with dietary treatments and then challenged with *Edwarsellia tarda* for 84 days (Crust Hyd: crustacean protein hydrolysate).

Figure 18. Performance of hydrolysate from different origins (fish and crustacean) in European seabass fed dietary treatements for 18 days by measuring specific growth rate (SGR) (FM5: fish diet containing 5% of fish meal; FM20: fish diet containing 20% of fish meal).

Figure 19. Performance of hydrolysate from different origins (fish and crustacean), applied by inclusion or top-coating, in European seabass fed dietary treatements for 57 days by measuring specific growth rate (SGR) (FM5: fish diet containing 5% of fish meal; FM20: fish diet containing 20% of fish meal).

## DETAILED DESCRIPTION OF THE INVENTION

### DEFINITIONS

Unless specifically stated otherwise, percentages are expressed herein by weight.

Percentages can be expressed herein by weight of a product reference on a "dry matter basis". The person skilled in the art will appreciate that the term "dry matter basis" means that an ingredient's concentration or percentage in a composition is measured after the free water has been removed, or determined on the basis of the weight of the composition once the weight of any free moisture in the composition has been subtracted.

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a feed" includes a plurality of such "methods" or "feeds". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The term "about" as used herein when referring to a measurable value such as an amount, a temporal duration, and the like, is meant to encompass variations of $\pm 15\%$, more preferably $\pm 10\%$, even more preferably $\pm 5\%$ from the specified value, as such variations are appropriate to reproduce the disclosed methods and products.

The terms "aquaculture", "fish farming", "fish breeding", and "fish rearing" are synonymous and are used herein according to their usual equivalent meaning. Fish are generally bred in "pens", "ponds", "tanks", or "cages" of different sizes, volumes and capacities, depending on the fish species to be reared, the location of the fish farm, the financial means of the fish farmer, etc.

The term "pen" will be used below to refer to anyone of a pen, a pond, a tank, and a cage.

In the context of the present invention, the term "fish" or "cultured fish" refers to any fish species that can be reared for the purposes of supplying dietary fish to the population (humans and animals, in particular, companion animals).

There are 3 distinct "groups of fish" that are defined by the nutritional requirements and feeding habits of the fish: the group of carnivorous fish, the group of omnivorous fish, and the group of herbivorous fish.

As examples of carnivorous fish species, one can cite pink salmon (*Oncorhynchus gorbuscha*), chum salmon (*Oncorhynchus keta*), coho salmon (*Oncorhynchus kisutch*), masu salmon (*Oncorhynchus masou*), rainbow trout (*Oncorhynchus mykiss*), sockeye salmon (*Oncorhynchus nerka*), Atlantic salmon (*Salmo salar*), sea trout (*Salmo trutta*), brook trout (*Salvelinus fontinalis*), lake trout (*Salvelinus namaycush*), Japanese eel (*Anguilla japonica*), American eel (*Anguilla rostrata*), European eel (*Anguilla Anguilla*), largemouth black bass (*Micropterus salmoides*), greater amberjack (*Seriola dumerili*), Japanese amberjack (*Seriola quinqueradiata*), Japanese jack mackerel (*Trachurus japonicas*), dark seabream (*Acanthopagrus schlegeli*), white seabream (*Diplodus sargus*), crimson seabream (*Evynnis japonica*), red seabream (*Pagrus major*), red porgy (*Pagrus pagrus*), goldlined seabream (*Rhabdosargus sarba*), gilthead seabream (*Sparus aurata*), red drum (*Sciaenops ocellatus*), Southern bluefin tuna (*Thunnus maccoyii*), Northern bluefin tuna (*Thunnus thynnus*), climbing perch (*Anabas testudineus*), turbot (*Psetta maxima*), bastard halibut (*Paralichthys olivaceus*), common sole (*Solea vulgaris*), Senegalese sole (*Solea senegalensis*), Atlantic halibut (*Hippoglossus Hippoglossus*), striped bass (*Morone saxatilis*), barramundi (*Lates calcarifer*), Nile perch (*Lates niloticus*), Atlantic cod (*Gadus morhua*), European seabass (*Dicentrarchus labrax*), grouper (*Epinephelus sp.*) spotted coralgrouper (*Plectropomus maculates*), European perch (*Perca fluviatilis*), meagre (*Argyrosomus regius*), cobia (*Rachycentron canadum*).

As examples of omnivorous fish species, one can cite barb species (*Puntius spp.*), black carp (*Mylopharyngodon piceus*), Chinese mud carp (*Cirrhinus molitorella*), climbing perch (*Anabas testudineus*), common carp (*Cyprinus carpio*), crucian carp (*Carassius carassius*), pirapatinga (*Piaractus brachypomus*), silver or Java barb (*Barbonymus gonionotus*), Indian mrigal carp (*Cirrhinus mrigala*), Pacu (*Piaractus mesopotamicus*), Tilapia species [*Oreochromis spp.* (*niloticus* and *mossambicus* and hybrids), *Sarotherodon spp., Tilapia spp.*], catfish species [*Clarias spp.* (*gariepinus, macrocephalus,* hybrids), *Pangasius spp. (Pangasius hypophthalmus, Pangasius pangasius*), channel catfish (*Ictalurus punctatus*), amur catfish (*Silurus asotus*), Chinese longsnout catfish (*Leiocassis longirostris*), yellow head catfish (*Pelteobagrus fulvidraco*)].

As examples of herbivorous fish species, one can cite Chinese silver carp (*Hypophtalmichthys molitrix*), Indian catla carp (*Catla catla*), Indian rohu carp (*Labeo rohita*), milkfish (*Chanos chanos*), mullet (*Mugil cephalus*), Chinese grass carp (*Ctenopharyngodon idella*), Chinese "Wuchang" bream (*Megalobrama amblycephala*), large gourami (*Osphronemus goramy*), snakeskin gourami (*Trichigaster pectoralis*), some Tilapia species (*Tilapia rendalli* and *Tilapia zillii*), giant gourami (*Osphronemus goramy*), bighead carp (*Hypophthalmichthys nobilis* (filter feeder)).

The terms "larval", "larva", and "larvae" refer to a newly hatched, earliest stage of fish development that undergo metamorphosis, differing markedly in appearance from the juvenile, adult, and mature fish and having limited digestive and absorptive capacities of feed.

Thus, as used herein, the term "post-larval" refers to stages of development when the fish is scaled, look likes morphologically to the adult and has full digestive and absorptive capacities of feed. The term "post-larval fish" thus encompasses juvenile fish, adult fish, and mature fish. Herein, the term "post-larval fish" means any fish selected from juvenile fish, adult fish, and mature fish. Mixes of fish selected from juvenile fish, adult fish, and mature fish are also encompassed by the term "post-larval fish".

As used herein, the term "shellfish" or "crustaceans" refers to a large family of marine arthropods, which includes common members as crabs, lobsters, crayfish, shrimp, krill, and barnacles. Preferably, in the context of the present invention, the term "crustaceans" refers to the following families: Penaeidae, Palaemonidae, Pandalidae, Galatheidae, Euphausiidae, Mysidae, and Nephropidae. Preferred crustaceans are shrimp and krill.

By the term "crustacean proteinaceous materials", it is meant herein whole crustaceans and/or parts or by-products thereof, these parts or by-products thereof being one or more of, *inter alia,* head, viscera, flesh, shell, and forelegs.

The term "feed" or "diet" as used herein means one or more products or compositions that are intended for ingestion by fish and provide at least one nutrient to the fish. The composition of the feed depends on the group of fish that will be fed with said feed. A feed for carnivorous fish is different from a feed for omnivorous fish and from a feed for herbivorous fish, the two latter feeds being also different from each other. Typically, fish, especially carnivorous fish, need proteins/peptides/amino acids, fat, minerals, and vitamins in order to grow and to be in good health.

The term "feed" or "diet" according to the present invention excludes "baits" that are only used to attract fish.

Fish "feed" or fish "diet" is typically composed of one or more protein sources such as, but not limited to, marine protein including, *inter alia,* fish meal and krill meal, vegetable protein (e.g., soy meal, rapeseed meal, wheat gluten, corn gluten, lupine meal, pea meal, sunflower seed meal, and rice meal), and slaughterhouse by-products such as blood meal, bone meal, feather meal, and poultry meal. Fish "feed" or fish "diet" further contains fats such as fish oil and/or plant-based oils (e.g., rapeseed oil and soy oil), and/or land-based fats (in particular, poultry fat) as energy sources. It may also contain a binder, usually in the form of a starch-containing raw material, such as wheat or wheat flour, potato flour, rice, rice flour, pea flour, beans or tapioca flour, to give the feed the desired strength and form stability. Usually, fish "feed" or fish "diet" further contains minerals and vitamins for taking care of good growth and good health of the fish. The feed may also contain further ingredients such as pigments. Thus, a typical fish "feed" or fish "diet" is a composite feed wherein the relative amounts between proteins, fat, carbohydrates, vitamins, minerals and any other ingredients is calculated to be optimally adapted to the nutritional needs of the group of fish and of the fish species based on the age of the fish, the rearing method and the environmental conditions. It is common that feeding is done with only one type of feed at once and with that every piece of feed is nutritionally adequate. Thus, common fish "feed" or fish "diet" has an approximate composition of 25-60 wt% protein, 5-40 wt% lipid, and 3-15 wt% moisture.

As a composite feed, typical fish "feed" or fish "diet" contains more than one feed ingredient. Thus, fish "feed" or fish "diet" as disclosed herein advantageously contains at least one feed ingredient of the present invention and at least one other conventional fish feed ingredient such as fish meal, plant meal, and the like.

As used herein, a "juvenile feed" is formulated to meet nutritional requirements of fish having a body weight ranging from about 0.5 g to about 50g.

As used herein, a "grower feed" is formulated to meet nutritional requirements of fish having a body weight ranging from about 50g to the marketable fish weight.

As used herein, a "broodstock feed" is formulated to meet nutritional requirements of mature / adult fish that are commonly used as genitor in aquaculture.

Originally, in the farming of carnivorous fish, there were used whole fish or ground fish to cover the nutrient requirements of the farmed fish. Ground fish mixed with dry raw materials of various kinds, such as fish meal and starch, was termed "soft feed". Gradually, the farming became industrialized and soft feed was replaced by dry feed of the pressed feed type. The pressed feed was gradually replaced by dry feed of the extruded feed type. Today, extruded feed is nearly universal in the farming of a high number of fish species such as several species of salmonids, cod, sea bass and sea bream.

In its original and widest sense, "extrusion" means to create an object having a fixed cross-sectional profile. This is done by pulling or forcing a formable material through a die opening having the desired cross-section. In the food and feed industries, especially in the fish feed industry, the term "extrusion" is commonly used in a narrower sense. In these industries, extruders of the single screw or double screw type are used. The extruded material is a mixture of protein raw materials, starch containing raw materials, fat, and water. The water may be added to the mixture in the form of water or steam. In addition, the mixture may comprise minerals and vitamins and possibly pigment. The mixture may be preheated in a preconditioner where the heating takes place by addition of steam to the mixture. Steam and water may also be added to the substance inside the extruder. In the extruder itself, the dough-like substance is forced by means of the screws toward a constriction in the outlet end of the extruder and on through a die plate where the substance gets a desired cross-sectional shape. On the outside of the die plate is normally a rotating knife cutting the string coming out of the die holes into desired length. Normally, the pressure on the outside of the die plate will be equal to the surrounding pressure. The extruded product is generally referred to as "extrudate". Due to the pressure created inside the extruder and the addition of steam to the substance, the temperature can be above 100°C and the pressure can be above atmospheric pressure in the substance before it is forced out through the die openings. This extrusion process is also termed "cooking extrusion". Thus, by the term "extrusion" is meant herein cooking extrusion either by means of a single screw extruder or a double screw extruder. By an "extruded feed" is meant a feed produced by cooking extrusion either by means of a single screw extruder or a double screw extruder. Extruded fish feed is typically in the form of pellets. Most of, if not all, currently-available "extruded feed" contain less than about 10% water and are oil-coated.

By a "pressed feed" is meant a feed produced by means of a feed press. This process differs from extrusion in several ways. There is used less water and steam in the process. The feed mixture is forced through a die ring from the inside out by means of rollers rotating on the inside of the die ring. Temperature and pressure are lower than in extrusion, and the product is not porous. The process entails that the starch is not as digestive as after extrusion. A "pressed feed" will normally contain less than about 10% water after pressing and any oil coating. It is not necessary to dry a pressed feed. The feed is cooled prior to optional packaging.

By a "dry feed" is meant a feed of the pressed or extruded type.

As used herein, the term "feed ingredient" means a fish feed component or a fish diet component. It may be a component of a composite, complete, formulated fish feed such as a component of an extruded feed, in particular of a pellet. Alternatively, it may be a distinct feed supplement given to cultured fish in addition to the formulated feed. In such an embodiment, the feed ingredient and the formulated feed are two separate components making a complete fish feed and they can be given to the fish either simultaneously or separately.

A "feed ingredient" may be under various forms. It can be either a liquid (e.g., having from about 10% to about 30% dry matter), or a liquid concentrate (e.g., having from about 30 to about 60% dry matter), or a paste (e.g., having from about 60 to about 85% dry matter), or a powder (e.g., having from about 85 to about 100% dry matter).

As used herein, a "composite feed ingredient" is a mixture or a combination or an association or a composition of fish feed ingredients including at least one feed ingredient of the present invention (that is made of crustacean protein hydrolysates) and one or more other feed ingredients different from crustacean protein hydrolysates such as conventional fish feed ingredients (e.g., fish meal, plant meal, and the like).

The term "pellet" used herein refers to particulate chunks or pieces formed by either a press or extrusion process. The pieces can vary in sizes and/or shapes, depending on the process or the equipment. Most fish feed pellets have a cylindrical shape. Since the fish is farmed using a fish feed product, starting with juvenile (having the weight of about 0.5 g) up to large fish having a weight of several kilograms (e.g. 4 to 5 kg), various pellet sizes are required and used in the feeding at different stages of the growth of the fish. Size and/or shape of the pellets have indeed to be adapted to the size of the fish. Thus, during one cycle of fish rearing, pellets of increasing sizes are used as the fish is growing. For example, in the farming of salmon, 6 or 7 different pellet sizes are typically needed when using the existing fish feeds. Also, in seabass farming, pellets of 5 different sizes are commonly used to comply with the fish growth. The size of the pellet to be used is determined by the size of the fish in accordance with prior practice.

As used herein, the terms "feed pellets" fulfil both definitions of "feed" and "pellets" above. Thus, the terms "feed pellets" refer not only to the composition and formulation of the feed but also to the physical structure, the shape, the size, and the density of the pellets.

The term "amino acid" means a molecule containing both an amino group and a carboxyl group. In some embodiments, the amino acids are α-, β-, γ- or δ-amino acids, including their stereoisomers and racemates.

By the term "free amino acids", it is meant herein amino acids that are individually present as unbound ingredients in a product or a composition. Free amino acids do not form part or are not contained into peptides or proteins. When contained in a feed ingredient, the free amino acids are not expected to significantly react *in situ* with any other ingredient that may be present in the feed ingredient. They are thus comprised as such in the feed ingredient.

By the term "peptide", it is meant herein a short chain of amino acids. In particular, a "peptide" in the present context is characterized by its molecular weight (MW) expressed in Dalton (Da).

By "total proteins" or "crude proteins", it is meant herein the global amount of proteins present in a given product.

By "soluble proteins", it is meant herein the protein fraction of a given product, that is capable of being dissolved in water. In fact, "soluble proteins" mainly refer to peptides and free amino acids.

By the term "proteases", it is meant enzymes that hydrolyse the peptide bonds that link amino acids together in a polypeptide chain.

By the term "endoprotease" or "endopeptidase", it is meant any proteolytic enzyme that catalyzes the cleavage of internal bonds in a peptide or a protein.

By the term "exoprotease" or "exopeptidase", it is meant any proteolytic enzyme that catalyzes the cleavage of the external peptide bonds in a peptide or a protein.

By the term "endogenous proteases", it is meant proteases that are originating or produced within an organism, a tissue, or a cell.

By the term "exogenous proteases", it is meant proteases that are not naturally present in an organism, a tissue, or a cell and that are added to this organism, tissue or cell in order to hydrolyse proteins.

In the field of the present invention, the skilled artisan is familiar with "zootechnical parameters" which include survival rate, feed intake or feed consumption (Fc), specific growth rate (SGR), and feed conversion ratio (FCR). These parameters are commonly used in aquaculture to assess, e.g., how/what fish eat or prefer to eat, how fish grow, how fish utilize the feed ingested, etc. They are determined using conventional experimental measures and mathematical equations that are well-known in the art (see, e.g., the handbook by Guillaume et al. published in September 2001).

The "survival rate" parameter can be defined as the ratio of the final fish number (i.e., the total number of living fish that are finally contained in a pen) to the initial fish number (i.e., the total number of fish that are initially contained in the pen).

The "specific growth rate" parameter (SGR) is expressed as percentage increase in fish biomass from day to day. SGR (expressed, e.g., in %/day) does not take into account the amount of feed fed to obtain growth. It is a measure of growth rate only. SGR depends on the digestibility of the fish feed and its profile in terms of protein and fat ratio, as well as of amino acid and fatty acid compositions.

The "feed consumption" or "feed intake" parameter (Fc) is defined as the weight of the feed really consumed by the fish in the pen during a given period of time. Fc can be calculated using Equation (1):

$$Fc = Fd - Fu,$$

wherein Fd is the dry weight of the total feed that is distributed in excess in the pen during said period of time, and Fu is the dry weight of the total uneaten feed that is recovered daily from the pen during said period of time.
Fc can be expressed in g feed / kg of average biomass of fish / day.

The "feed conversion ratio" parameter (FCR) is an economic parameter indicating how efficiently the fish grows on the feed. Fish growth actually corresponds to protein, fat and water deposition in the muscle. FCR thus reflects the "feed utilization" by the fish, or the "feed efficiency". FCR varies between fish species and also with the size of the fish. As an example, in Atlantic salmon, FCR may typically be from about 0.7 to about 2. Industrial fish feed in the form of pressed feed and extruded feed contains low amounts of water, typically from about 5 to about 10%. The fish body has a higher water content. This is the reason why the FCR of different feeds should theoretically take into account the water content of the feeds as water does not contribute to growth. More precisely, the FCR should theoretically be calculated on a dry matter basis. However, as the water content is within a narrow range and as it is cumbersome for the fish farmer to calculate dry matter FCR, FCR is usually calculated on the feed including water content.

It is of note that zootechnical parameter determination is important in aquaculture, at least for the following reasons. There are typically numerous individual fish in a pen or a pond (e.g., 10000 to 30000 individuals), so that feeding cannot be observed on the individual level. In addition, some feed is commonly lost because feed pellets break apart in the feeding system and the broken pieces are too small to be eaten or are so small that they are recognized as dust. Also, some feed pellets are not eaten by the fish but just sink through the water column. Moreover, some feed is lost because the fish are fed to satiation, while feeding continues (known as "overfeeding" or feeding "in excess"). Alternatively, underfeeding may occur, in which case the FCR increases because a higher proportion of the feed nutrients (fish-, plant- or land-based raw materials, nitrogen compounds, fat, carbohydrates, and the like) will be used for metabolic purposes instead of being used for muscle deposition.

The terms "promote", "increase", "enhance", and "improve" are used herein interchangeably. A biological or technical function or activity or effect of interest is "promoted" if it is better/higher in a tested group of fish when compared to a standard group of fish. As an example, bowel health is promoted if bowel health of a tested group of fish fed with a complete diet made of the feed ingredient of the present invention and of a conventional low fish meal feed (e.g., having a fish meal content of about 5% by weight) is better/higher than bowel health of a standard group of fish fed with said conventional low fish meal feed only.

As used herein, "a tested group of fish" is a group of fish fed with a complete diet made of the feed ingredient of the present invention and of a conventional low fish meal feed (e.g., having a fish meal content of about 5% by weight). "A standard group of fish" is a group of fish fed with a conventional low fish meal feed only (e.g., having a fish meal content of about 5% by weight). "A control group of fish" is a group of fish fed with a conventional high fish meal feed only (e.g., having a fish meal content of about 20% by weight).

As used herein, the terms "bowel", "intestine", and "gut" are synonymous.

The term "nutrient assimilation" means herein absorption or metabolization by the fish organism of dietary substances that are required by the fish in order to grow and to be in good health (in particular, proteins/peptides/amino acids, fat, minerals, and vitamins).

As used herein, the term "resistance to pathogens" means that cultured fish are not susceptible to infections or diseases caused by microbes, including virus, bacteria, fungi, moulds, and parasites. In particular, cultured fish do not suffer from enteritis.

When referring to a kit, the term "single package" means that the components of said kit are physically associated in or with one or more containers and considered as a unit for manufacture, distribution, sale, or use. Containers include, but are not limited to, bags, boxes, cartons, bottles, pouches, packages of any type or design or material, over-wrap, shrink-wrap, stapled or otherwise affixed components, or combinations thereof. A single package may be containers of individual components physically associated such that they are considered as forming a unit for manufacture, distribution, sale, or use.

As used herein, "means for communicating information or instructions" is a kit component under any form suitable for providing information, instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

"Coating" or "top-coating", as used herein, refers to topical deposition of a product or a composition onto the surface of a fish feed, such as by spraying, dusting, and the like.

"Inclusion" as used herein, refers to addition of a product or a composition internally to a fish feed preparation, by mixing it with the fish feed preparation, before further processing steps for obtaining the final fish feed.

The term "palatability" means a preference of a fish for one feed to another. Palatability refers to the overall willingness of a fish to eat a certain feed. Advantageously but not necessarily, palatability further refers to the capacity of the eaten feed to satisfy the fish. Whenever a fish shows a preference, for example, for one of two or more feeds, the preferred feed is more "palatable" and has "enhanced palatability". The palatability of one feed compared to one or more other feeds can be determined, for example, by testing consumption of the feeds by fish. Such preference can arise from any of the fish senses, but typically is related to, *inter alia,* taste, smell, aroma, flavour, texture, and/or mouth feel.

Unless otherwise specified, weights are herein expressed in grams.

DESCRIPTION OF SOME EMBODIMENTS OF THE INVENTION

The present invention herein provides a fish feed ingredient made of specific crustacean protein hydrolysates that are shown (i) to maintain and/or promote post-larval fish bowel health, and (ii) to enhance feed attractiveness or palatability.

Thus, the present invention concerns a fish feed ingredient made of one or more crustacean protein hydrolysates for use in a method for maintaining and/or promoting bowel health of cultured post-larval fish.

Preferably, said crustacean protein hydrolysates comprise:

- free amino acids in an amount from 10 to 60% by weight; and
- an amount of soluble proteins from 70 to 100% relative to the total protein weight of said hydrolysates, wherein said soluble proteins have a profile of distribution in peptide molecular weight as set forth in Table 1 below.

Table 1

| Peptide molecular weight (MW in Da) | Amount in % of the soluble proteins in the crustacean protein hydrolysates |
|---|---|
| MW < 500 | 50<%≤100 |
| 500 < MW < 1000 | 0≤%<20 |
| 1000 < MW < 5000 | 0≤%<20 |
| 5000 < MW < 10000 | 0≤%<5 |
| MW > 10000 | 0≤%<5 |

Yet preferably, said crustacean protein hydrolysates comprise:

- free amino acids in an amount from 12 to 58% by weight; and
- an amount of soluble proteins from 80 to 100% relative to the total protein weight of said hydrolysates, wherein said soluble proteins have a profile of distribution in peptide molecular weight as set forth in Table 2 below.

Table 2

| Peptide molecular weight (MW in Da) | Amount in % of the soluble proteins in the crustacean protein hydrolysates |
|---|---|
| MW < 500 | 57< % ≤ 100 |
| 500 < MW < 1000 | 0 ≤ % < 18 |
| 1000 < MW < 5000 | 0 ≤ % < 17 |
| 5000 < MW < 10000 | 0 ≤ % < 4 |
| MW > 10000 | 0 ≤ % < 4 |

In particular, said crustacean protein hydrolysates are selected from protein hydrolysates from the following crustacean families: Penaeidae, Palaemonidae, Pandalidae, Galatheidae, Euphausiidae, Mysidae, and Nephropidae. Yet in particular, said crustacean protein hydrolysates are selected from protein hydrolysates from shrimp and krill.

Protein hydrolysates can be obtained by conventional techniques. For example, protein hydrolysis can be achieved by one or more of physical means (e.g., heat and/or shear), chemical means (using acids or bases), enzymatic means (using endogenous enzymes - thereby obtaining autolysates or ensilages -, and/or exogenous enzymes). Advantageous embodiments of protein hydrolysis for producing hydrolysates of interest in the context of the present invention are illustrated in the Examples below.

As mentioned in the Definitions above, the fish feed ingredient made of crustacean protein hydrolysates can be a liquid, a liquid concentrate, a paste, or a powder. Under these circumstances, examples of proximal (or analytical) compositions of the feed ingredient may be as indicated in Table 3 below.

Table 3

| Hydrolysate form | Dry matter (%) | Protein (%) | Fat (%) | Ash (%) |
|---|---|---|---|---|
| Liquid | 10-30% | 8-20% | 1-6% | 1-10% |
| Concentrate | 30-60% | 8-50% | 1-15% | 1-20% |
| Paste | 60-88% | 20-80% | 1-30% | 1-30% |
| Powder | >88% | 50-90% | 1-35% | 1-35% |

Preferably, said cultured post-larval fish is a carnivorous post-larval fish. A particularly preferred carnivorous fish is European seabass.

In particular, bowel health is maintained and/or promoted in said cultured post-larval fish by improving intestine epithelium development.

Yet in particular, bowel health is maintained and/or promoted in said cultured post-larval fish by enhancing nutrient assimilation by said cultured post-larval fish.

Yet in particular, bowel health is maintained and/or promoted in said cultured post-larval fish by enhancing resistance of said cultured post-larval fish to pathogens.

It is also described herein a method for maintaining and/or promoting bowel health of cultured post-larval fish comprising:

- feeding said post-larval fish with a feed ingredient made of one or more crustacean protein hydrolysates.

Yet it is described herein the use of one or more crustacean protein hydrolysates for preparing a fish feed ingredient intended to be used in a method for maintaining and/or promoting bowel health of cultured post-larval fish.

All the preferred, advantageous or particular embodiments described above in connection with the feed ingredient according to the present invention, also apply to the other parts of the present disclosure.

Yet it is disclosed herein a feed ingredient for feeding cultured post-larval fish made of one or more crustacean protein hydrolysates as described above.

Advantageously, such a feed ingredient made of crustacean protein hydrolysates has been proved by the Inventors to have a palatability-enhancing effect when used in fish feed (data not shown).

The present disclosure also concerns a method for preparing a feed ingredient as described above, comprising:

a) providing one or more crustacean proteinaceous materials;

b) hydrolyzing said materials;

c) recovering crustacean protein hydrolysates comprising:

- free amino acids in an amount from 10 to 60% by weight; and
- an amount of soluble proteins from 70 to 100% relative to the total protein weight of said hydrolysates, wherein said soluble proteins have a profile of distribution in peptide molecular weight as set forth in Table 1 above;

and

d) obtaining said feed ingredient made of one or more of said crustacean protein hydrolysates.

In particular, said method comprises:

a) providing one or more crustacean proteinaceous materials;

b) hydrolyzing said materials;

c) recovering crustacean protein hydrolysates comprising:

- free amino acids in an amount from 12 to 58% by weight; and
- an amount of soluble proteins from 80 to 100% relative to the total protein weight of said hydrolysates, wherein said soluble proteins have a profile of distribution in peptide molecular weight as set forth in Table 2 above;

and

d) obtaining said feed ingredient made of one or more of said crustacean protein hydrolysates.

In particular embodiments, said method further comprises one or more intermediate steps between steps b) and d) above, such as:

e) thermally treating the mixture resulting from step b) or c) ; and/or

f) further stabilizing the resulting composition of step b) or c) by, e.g., acidification, addition of preservatives, and the like; and/or

g) optionally, drying the composition obtained from step b) or c).

In a yet particular embodiment, two or more crustacean protein hydrolysates can be mixed together in order to obtain a final crustacean protein hydrolysate for use as a feed ingredient in fish feed. Should a drying step g) be performed, then said two or more crustacean protein hydrolysates can be mixed before said step g).

In another yet particular embodiment, the crustacean protein hydrolysate(s) can be mixed to a fish meal or to a plant meal, so that a composite fish feed ingredient is obtained. By doing so, the profile of distribution in peptide molecular weight of the resulting composite fish feed ingredient can be different from that described above for the crustacean protein hydrolysates.

It is further described herein a composite fish feed ingredient for feeding cultured post-larval fish comprising at least one feed ingredient made of crustacean protein hydrolysates as described above.

Such a composite fish feed ingredient can thus further comprise any conventional fish feed ingredients different from crustacean protein hydrolysates, such as fish meal, plant meal, and the like.

Thus, such a composite fish feed ingredient can be obtained according to conventional practice in the art. For example, it can be obtained by at least:

- providing at least one feed ingredient made of crustacean protein hydrolysates (that can be prepared using the method disclosed above); and
- mixing with one or more conventional fish feed ingredients different from crustacean protein hydrolysates, such as fish meal, plant meal, and the like.

Yet it is described herein a fish feed for feeding cultured post-larval fish comprising:

- at least one feed ingredient made of crustacean protein hydrolysates; and/or
- at least one composite fish feed ingredient as described above. Advantageously, said fish feed comprises an appropriate amount of said at least one feed ingredient made of crustacean protein hydrolysates, wherein said appropriate amount depends on the type of feed. In particular,
  - For juvenile feed, said appropriate amount of feed ingredient made of crustacean protein hydrolysates ranges from about 0.5 to about 15%, preferably from about 1 to about 10% (% expressed by weight of the feed on a dry matter basis);
  - For grower feed, said appropriate amount of feed ingredient made of crustacean protein hydrolysates ranges from about 0.5 to about 8%, preferably from about 1 to about 5% (% expressed by weight of the feed on a dry matter basis);
  - For broodstock feed, said appropriate amount of feed ingredient made of crustacean protein hydrolysates ranges from about 0.5 to about 8%, preferably from about 1 to about 5% (% expressed by weight of the feed on a dry matter basis).

Such a fish feed can thus further comprise any conventional fish feed ingredients such as fish meal, plant meal, and the like.

Thus, such a fish feed can be obtained according to conventional practice in the art. For example, it can be obtained by at least:

- providing at least one feed ingredient made of crustacean protein hydrolysates (that can be prepared using the method disclosed above) and/or at least one composite fish feed ingredient; and
- mixing with one or more conventional fish feed ingredients such as fish meal, plant meal, and the like.

In particular, one or more fish feed ingredients and/or one or more composite fish feed ingredients as described herein can be applied to a fish feed under the form of pellets by inclusion and/or by coating. In other words, either fish feed ingredient(s) and/or composite fish feed ingredient(s) is(are) included in the fish feed pellets or the pellets are coated with fish feed ingredient(s) and/or with composite fish feed ingredient(s).

It is further disclosed herein a method for feeding cultured post-larval fish, comprising:

- feeding said post-larval fish with a feed ingredient or a composite feed ingredient or a fish feed as described above.

Yet it is disclosed herein a kit for use in a method for maintaining and/or promoting bowel health of cultured post-larval fish, comprising, in one or more containers in a single package:

a) at least one feed ingredient made of crustacean protein hydrolysates as described above; and/or

b) at least one composite feed ingredient as described above; and/or

c) at least one fish feed as described above.

Optionally, said kit further comprises one or more of:

- at least one conventional fish feed ingredient different from crustacean protein hydrolysates, such as fish meal, plant meal, and the like; and/or
- a means for communicating information or instructions to the user for appropriate use of the components of the kit.

The following Examples illustrate some embodiments and advantages of the present invention.

EXAMPLES

## 1. Crustacean protein hydrolysate description

### 1.1 Origin of the raw materials

The raw materials can be whole animal or parts of animal from wild or domestic crustaceans.

For example, one can use animals from the Euphausiidae family: krill (*Euphausia superb*), from the Penaeidae family: white shrimp (*Penaeus vannamei*), tiger shrimp (*Penaeus monodon*), blue shrimp (*Litopenaeus stylirostris*), from the Calanidae family (*Calanus finmarchicus*), from the Pandalidae family (*Pandalus borealis*), and the like.

### 1.2 Raw material processing to obtain crustacean protein hydrolysates

Process pre-hydrolysis:

o Water addition: 0 to 50%
o Grinding (3mm to 30mm)
o Heating to the setting temperature value of hydrolysis step (see below)

Hydrolysis process parameters:

- o Hydrolysis process is recommended to be conducted in closed horizontal or vertical reactor (batch) in order to control the reaction and get standardized hydrolysate batch by batch
- o Enzymes are exogenous or endogenous proteases that can be exopeptidases or endopeptidases or mixtures of both
- o Enzyme level, when exogenous enzymes are added: 1% to 5% related to the crude protein of the raw materials
- o Temperature of hydrolysis: depending on enzyme specifications but usually between 40°C and 60°C
- o Time of hydrolysis: between 15min and 120min, from reaching the hydrolysis temperature setting value

Process post-hydrolysis:

- o Enzyme inactivation: depending on enzyme specifications but usually at least 80°C for 15min
- o The hydrolysates can be defatted if required by process constraints (such as drying)
- o The hydrolysates can be stabilized as a liquid finished product or concentrated or dried.

### 1.3 Hydrolysate specifications

Proximal (or analytical) composition:

The thus obtained hydrolysates can be a liquid (10% to 30% dry matter), a liquid concentrate (30% to 60% dry matter), a paste (60% to 85% dry matter), or a powder (>85% dry matter).

Depending on the form of the hydrolysates (liquid, concentrate, paste, or powder), the proximal composition can be as indicated in Table 3 above.

Peptide profile:

The peptide profile of the thus obtained hydrolysates is essential to achieve the expected effects of the feed ingredient.

The peptide profile is expressed as percentage of the soluble proteins present in the crustacean protein hydrolysates. At the end of the process, those soluble proteins can represent at least 70% and preferably at least 80% of the total proteins.

At the end of the hydrolysis process, the protein molecular weight profile meets that indicated in Tables 1 and 2 above.

## 2. <u>Performance of crustacean protein hydrolysates in post-larval fish</u>

### 2.1 Positive effect of dietary crustacean protein hydrolysates on intestine development in post-larval fish

A growth trial was conducted in European seabass to study the effect of dried dietary crustacean protein hydrolysate ("CRUS HYD") and white fish hydrolysate ("white fish HYD") (Fig. 1) when applied on a low fish meal diet (5%, "FM5") and compared to a positive control containing 20% fish meal ("FM20"). Feed were distributed by excess with daily collection of uneaten feeds.

To formulate the low fish meal diets containing 5% fish meal ("FM5"), fish meal of FM20 was replaced in FM5 by a mixture of plant-based raw materials. Free methionine, free lysine and a source of phosphorous (monocalcium phosphate) were added to meet the European seabass nutritional requirements (Table 4 below). All other ingredients (e.g., vitamins, minerals, and the like) were the same between all feed formulations. All feeds were formulated to be isonitrogenous, isocaloric and isolipidic.

Table 4. Feed formula fed European seabass for 56 days (proximal composition: crude protein: 45%; crude fat: 16%; ash: 6.5%; Energy: 5.1Kcal/kg)

| Ingredients | FM5 | FM5 + 5% CRUS HYD | FM5 + 5% WHITE FISH HYD | FM20 |
|---|---|---|---|---|
| Fish meal (Super Prime quality) | 5.00 | 5.00 | 5.00 | 20.00 |
| CRUST HYD | 0.00 | 5.00 | 0.00 | 0.00 |
| WHITE FISH HYD | 0.00 | 0.00 | 5.00 | 0.00 |
| Mix plant protein | 74.25 | 68.40 | 67.95 | 60.70 |
| Free methionine | 0.57 | 0.52 | 0.52 | 0.43 |
| Free Lysine | 1.60 | 1.46 | 1.45 | 1.08 |
| Monocalcium phosphate | 2.52 | 2.30 | 2.29 | 1.35 |
| Fish oil | 13.70 | 13.45 | 13.13 | 12.78 |
| Cellulose | 0.00 | 1.50 | 2.30 | 1.30 |
| Premix (vitamins, minerals, antioxidants, ..) | 2.36 | 2.36 | 2.36 | 2.36 |

At the end of the 56 days of trial, fish were weighed for calculation of specific growth rate (SGR) and feed conversion ratio (FCR), then nine fish per treatment were sampling for histological analysis of the mid-intestine. The ratio internal diameter/external diameter "ID/ED" of mid intestinal histological section was calculated as shown on Fig. 4.

At the end of the trial, only the addition of crustacean protein hydrolysates to the fish diet allowed to improve significantly the growth performance of fish fed FM5 diet to reach that of the positive control (Fig. 2). In the same way, feed efficiency was slightly improved (Fig. 3).

The dietary addition of crustacean protein hydrolysates having high levels of free amino acids and small peptides ("hydrolysate high DH") improved significantly the intestine microvilli development compared to fish fed FM5 (P=0.06) and fish fed FM20 (P=0.07) (Fig. 5). The height of microvilli was higher than in other treatments, even positive control ("FM20"), and internal lumen very small as illustrated in Fig. 5bis. The white fish hydrolysates evaluated in this trial did not have this significant effect on intestine development.

The remodeling of the intestine of fish fed with crustacean protein hydrolysates was confirmed by the analysis of gene expression of beta-actin (a protein involved in cell wall structure) in fish intestine collected from another trial conducted in the same conditions than the one reported above. It was recorded a significant over-expression of beta-actin gene in fish fed diet with crustacean protein hydrolysates, giving another evidence for a positive effect of this ingredient on intestine epithelium development (Fig. 6).

To obtain the results illustrated in Fig. 6, amplification curves were generated from the real-time qPCR data and the cycle threshold ("CT") was calculated based on a fluorescence threshold of 0.01, where CT was defined as the threshold cycle of PCR at which an amplified product was first detected. Subsequently the ΔCT for each sample was determined using the equation ΔCT = CT target gene - CT reference gene to calculate the relative expression of each gene to the internal reference control. This was accomplished via a modification of the original equation to relative expression = 1 / (2ΔCT) for both the control and treatment samples (Livak and Schmittgen, 2001; Schmittgen and Livak, 2008).

Consequently, the surface of nutrient absorption is improved, meaning that feed efficiency could be enhanced when crustacean protein hydrolysates are an ingredient of the feed.

### 2.2 Positive effects of crustacean protein hydrolysates on dietary nutrient assimilation in post-larval fish

To study the positive effect of dried dietary crustacean protein hydrolysates in feed utilization, a full factorial experiment was designed in European seabass fed graded level of dietary fish meal and dietary crustacean protein hydrolysates ("CRUS HYD") or white fish hydrolysates ("white fish HYD"), having different nutritional profile and protein quality (Figs. 7 and 8).

Twenty feeds were formulated to contain 4 levels of fish meal (0, 5, 10, and 20%) and for each level offish meal, 5 levels of hydrolysates (0, 2.5, 5, 7.5, and 10%) were evaluated (Table 5 below).

To formulate the low fish meal diets, fish meal was replaced by a mixture of plant-based raw materials. Free methionine, free lysine and a source of phosphorous (monocalcium phosphate) were added to meet the European seabass nutritional requirements (Table 6 below). All other ingredients (e.g., vitamins, minerals, and the like) were the same between all feed formulations. All feeds were formulated to be isonitrogenous, isocaloric and isolipidic.

Four treatments were repeated to improve the robustness of the trial. Feeds were distributed to European seabass for 47 days. Feed rationing was applied to avoid an influence of hydrolysate addition on feed palatability and so, on feed utilization performances.

At the end of the trial, fish were weighed then growth and feed utilization results were analyzed using ANOVA statistical method (Statgraphics software) and modelized using the iso-curves responses illustration.

Table 5 Dietary treatments fed to European seabass for 47 days

| Treatments | Level of fish meal (%) | Level of hydrolysate (%) |
|---|---|---|
| 1 | | 0 |
| 2 | | 2.5 |
| 3 | 0 | 5 |
| 4 | | 7.5 |
| 5 | | 10 |
| 6 | | 0 |
| 7 | | 2.5 |
| 8 | 5 | 5 |
| 9 | | 7.5 |
| 10 | | 10 |
| 11 | | 0 |
| 12 | | 2.5 |
| 13 | 10 | 5 |
| 14 | | 7.5 |
| 15 | | 10 |
| 16 | | 0 |
| 17 | | 2.5 |
| 18 | 20 | 5 |
| 19 | | 7.5 |
| 20 | | 10 |
| 21 | 0 | 5 |
| 22 | 10 | 5 |
| 23 | 10 | 5 |
| 24 | 20 | 5 |

Table 6. Feed formula fed European seabass for 47 days (proximal composition: crude protein: 45%; crude fat: 16%; ash: 6.5%; Energy: 5.1Kcal/kg)

| **Dietary Fish meal** | **0.0%** | **0.0%** | **0.0%** | **0.0%** | **0.0%** |
|---|---|---|---|---|---|
| **Dietary CRUST HYD** | **0.0%** | **2.5%** | **5.0%** | **7.5%** | **10.0%** |
| **Ingredients** | | | | | |
| Fish meal (Super Prime quality) | 0.00% | 0.00% | 0.00% | 0.00% | 0.00% |
| CRUST HYD | 0.00% | 2.50% | 5.00% | 7.50% | 10.00% |
| Mix plant protein | 78.25% | 76.18% | 73.12% | 70.51% | 67.90% |
| Free methionine | 0.61% | 0.60% | 0.58% | 0.56% | 0.54% |
| Free Lysine | 1.82% | 1.77% | 1.70% | 1.64% | 1.59% |
| Monocalcium phosphate | 2.96% | 2.89% | 2.77% | 2.68% | 2.58% |
| Fish oil | 13.99% | 13.70% | 13.47% | 13.26% | 13.04% |
| Cellulose | 0.00% | 0.00% | 1.00% | 1.50% | 2.00% |
| Premix (vitamins, minerals, antioxidants, ..) | 2.36% | 2.36% | 2.36% | 2.36% | 2.36% |

(continued)

| | | | | | |
|---|---|---|---|---|---|
| **Dietary Fish meal** | **5.0%** | **5.0%** | **5.0%** | **5.0%** | **5.0%** |
| **Dietary CRUST HYD** | **0.0%** | **2.5%** | **5.0%** | **7.5%** | **10.0%** |
| **Ingredients** | | | | | |
| Fish meal (Super Prime quality) | 4.97% | 4.97% | 4.97% | 4.97% | 4.97% |
| CRUST HYD | 0.00% | 2.50% | 5.00% | 7.50% | 10.00% |
| Mix plant protein | 74.29% | 72.21% | 69.15% | 66.54% | 63.93% |
| Free methionine | 0.57% | 0.55% | 0.53% | 0.51% | 0.49% |
| Free Lysine | 1.60% | 1.55% | 1.48% | 1.42% | 1.36% |
| Monocalcium phosphate | 2.52% | 2.44% | 2.33% | 2.23% | 2.14% |
| Fish oil | 13.70% | 13.41% | 13.18% | 12.97% | 12.76% |
| Cellulose | 0.00% | 0.00% | 1.00% | 1.50% | 2.00% |
| Premix (vitamins, minerals, antioxidants, ..) | 2.36% | 2.36% | 2.36% | 2.36% | 2.36% |
| **Dietary Fish meal** | **10.0%** | **10.0%** | **10.0%** | **10.0%** | **10.0%** |
| **Dietary CRUST HYD** | **0.0%** | **2.5%** | **5.0%** | **7.5%** | **10.0%** |
| **Ingredients** | | | | | |
| Fish meal (Super Prime quality) | 10.01% | 10.01% | 10.01% | 10.01% | 10.01% |
| CRUST HYD | 0.00% | 2.50% | 5.00% | 7.50% | 10.00% |
| Mix plant protein | 70.06% | 67.54% | 64.93% | 61.87% | 58.81% |
| Free methionine | 0.53% | 0.51% | 0.49% | 0.47% | 0.45% |
| Free Lysine | 1.46% | 1.40% | 1.35% | 1.28% | 1.21% |
| Monocalcium phosphate | 2.16% | 2.07% | 1.98% | 1.86% | 1.75% |
| Fish oil | 13.41% | 13.10% | 12.89% | 12.65% | 12.42% |
| Cellulose | 0.00% | 0.50% | 1.00% | 2.00% | 3.00% |
| Premix (vitamins, minerals, antioxidants, ..) | 2.36% | 2.36% | 2.36% | 2.36% | 2.36% |
| **Dietary Fish meal** | **20.0%** | **20.0%** | **20.0%** | **20.0%** | **20.0%** |
| **Dietary CRUST HYD** | **0.0%** | **2.5%** | **5.0%** | **7.5%** | **10.0%** |
| **Ingredients** | | | | | |
| Fish meal (Super Prime quality) | 20.02% | 20.02% | 20.02% | 20.02% | 20.02% |
| CRUST HYD | 0.00% | 2.50% | 5.00% | 7.50% | 10.00% |
| Mix plant protein | 61.86% | 58.88% | 55.82% | 52.76% | 49.70% |
| Free methionine | 0.44% | 0.42% | 0.40% | 0.37% | 0.35% |
| Free Lysine | 1.11% | 1.04% | 0.97% | 0.90% | 0.83% |
| Monocalcium phosphate | 1.39% | 1.28% | 1.17% | 1.06% | 0.95% |
| Fish oil | 12.83% | 12.50% | 12.26% | 12.03% | 11.80% |
| Cellulose | 0.00% | 1.00% | 2.00% | 3.00% | 4.00% |
| Premix (vitamins, minerals, antioxidants, ..) | 2.36% | 2.36% | 2.36% | 2.36% | 2.36% |

Fig. 9 and Fig. 10 demonstrate that at the same dietary level of crustacean protein hydrolysates ("CRUS HYD"), growth and feed performances were higher than with fish meal. For example, only ~2.5% hydrolysate are needed to record a SGR of 2.26% compared to ~5% fish meal. Moreover, a FCR of 1.05 is obtained with ~3% hydrolysate versus ~9% fish meal. To summarize, a lower level of crustacean protein hydrolysate addition (2 to 3 times less) would be needed to reach the performance of fish meal, and that, even if the two ingredients have closed analytical composition and amino acid profile. The main difference between the two ingredients is the protein molecular size which appears to be an essential driver of performance in fish.

In the second experiment, even if white fish hydrolysate ("white fish HYD") tended to perform slightly better than fish meal, the performance stayed lower than with the crustacean protein hydrolysate (Figs. 11 and 12). At low level of addition, white fish hydrolysate could be preferred to fish meal but rapidly with increasing level of addition, fish meal and white fish hydrolysate gave the same performance. Moreover, at high level of addition, white fish hydrolysate tend to deteriorate growth and feed performances.

These two last trials clearly demonstrated the importance of the raw material origin and of the protein molecular weight profile of hydrolysates to support a high performance when added to a fish feed. Even if white fish hydrolysate showed the best nutritional profile represented by their protein level or amino acid profile, their performance stayed lower than that of crustacean protein hydrolysate because of a protein molecular weight profile less rich in very small peptides (<1000Da) and in free amino acids.

Based on these results, the Inventors could foresee different dietary applications of crustacean protein hydrolysates to improve fish and feeds performances.

### 3. <u>Applications of crustacean protein hydrolysates to post-larval fish feed</u>

#### 3.1 Performance of crustacean protein hydrolysates in post-larval fish fed with low fish meal diets

A trial was conducted in European seabass fed with FM5, FM20, FM5+5% crustacean protein hydrolysate ("Crust Hyd") for 45 days. Liquid crustacean protein hydrolysate concentrate (55% dry matter) was applied either by inclusion alone (5%1) or by inclusion and top-coating (3%I/2%C) to enhance palatability of the product. A treatment containing krill meal was also applied as this raw material is today considered as one of the most performing in aquaculture.

To formulate the low fish meal diets containing 5% fish meal (FM5), fish meal of FM20 was replaced in FM5 by a mixture of plant-based raw materials. Free methionine, free lysine and a source of phosphorous (monocalcium phosphate) were added to meet the European seabass nutritional requirements (Table 7 below). All other ingredients (e.g., vitamins, minerals, and the like) were the same between all feed formulations. All feeds were formulated to be isonitrogenous, isocaloric and isolipidic.

Table 7. Feed formula fed European seabass for 45 days (proximal composition: crude protein: 45%; crude fat: 14%; ash: 6.5%; Energy: 4.9Kcal/kg)

| Ingredients | FM5 | FM5 +5% CRUS HYD (I) | FM5 + 5% Krill Meal | FM5 +5% CRUS HYD (3% C/2% I) | FM20 |
|---|---|---|---|---|---|
| Fish meal (Super Prime quality) | 5.00 | 5.00 | 5.00 | 5.00 | 20.00 |
| CRUST HYD | 0.00 | 5.00* | 0.00 | 5.00* | 0.00 |
| Krill meal | 0.00 | 0.00 | 5.00 | 0.00 | 0.00 |
| Mix plant protein | 76.51 | 72.86 | 71.19 | 72.86 | 64.53 |
| Free methionine | 0.59 | 0.56 | 0.55 | 0.56 | 0.45 |
| Free Lysine | 1.67 | 1.59 | 1.55 | 1.59 | 1.08 |
| Monocalcium phosphate | 2.60 | 2.46 | 2.40 | 2.46 | 1.25 |
| Fish oil | 11.27 | 11.32 | 10.34 | 11.32 | 10.33 |
| Cellulose | 0.00 | 1.10 | 1.60 | 1.10 | 0.00 |
| Premix (vitamins, minerals, antioxidants, ..) | 2.36 | 2.36 | 2.36 | 2.36 | 2.36 |

*Equivalent 2.75% dry matter

At the end of the trial, fish were weighed and the number of skinny fish checked.

Inclusion of liquid crustacean protein hydrolysate concentrate in the FM5 diet resulted in a significant improvement of fish growth performances and feed utilization compared to the group fed with FM5 diet (Figs. 13 and 14). Both applications of the liquid crustacean protein hydrolysate concentrate (inclusion or inclusion + top-coating) performed well and top-coating combined to inclusion did not allow to get a higher performance than inclusion alone. If krill meal inclusion resulted in a performance improvement of the FM5 diet, the gain stayed lower than with crustacean protein hydrolysate.

Interestingly, applying crustacean protein hydrolysate allowed to get a very low number of skinny fish compared to the other treatments, even the high fish meal diet (FM20) or the diet containing krill meal (Fig. 15). Differences observed were significant between FM5 and FM5+crustacean protein hydrolysate (both application methods). These results are more evidences for the utilization of crustacean protein hydrolysate as a performing solution to improve and standardize the fish and feed performances.

### 3.2 Performance of crustacean protein hydrolysates to enhance post-larval fish resistance to pathogens

The benefit effect of crustacean protein hydrolysates on feed palatability, on feed utilization and, ultimately, on digestive system development could have some direct effects on the fish health status. In fact, it is assumed that intestine is one the main way for pathogens entrance into the fish organism and lower will be the intestine quality, higher will the risk of diseases.

To verify this hypothesis, a trial was conducted in two tropical species, red seabream and olive flounder, fed with a commercial-like diet containing 46-52% fish meal and either 2% or 7.2% liquid crustacean protein hydrolysate concentrate (55% dry matter) applied by top-coating or by inclusion, respectively (Tables 8 and 9 below).

Table 8. Feed formula for olive flounder (*Paralichthys olivaceus*)

| Ingredients | Experimental Diets | | |
|---|---|---|---|
| | Control (Con) | Con + crust Hyd coating | Con + Crust Hyd inclusion |
| White fish meal | 50.00 | 48.90 | 46.00 |
| Crustacean hydrolysate | 0.00 | 2.00 [1] | 7.20 [2] |
| Mix of plant-based meals | 38.50 | 38.50 | 38.50 |
| Squid liver oil | 4.00 | 4.00 | 4.00 |
| Soybean oil | 4.00 | 4.00 | 4.00 |
| Premix (vitamines, minerals, antioxidants ...) | 3.50 | 3.50 | 3.50 |

[1] Equivalent 1.1% dry matter; [2] Equivalent 4.0% dry matter
Crust Hyd: Crustacean hydrolysate

Table 9. Feed formula for red seabream *(Pagrus major)*

| Ingredients | Experimental Diets | | |
|---|---|---|---|
| | Control (Con) | Con + crust Hyd coating | Con + Crust Hyd inclusion |
| White fish meal | 52.00 | 50.90 | 48.00 |
| Crustacean hydrolysate | 0.00 | 2.00 [1] | 7.20 [2] |
| Mix of plant-based meals | 34.50 | 34.50 | 34.50 |
| Squid liver oil | 5.00 | 5.00 | 5.00 |
| Soybean oil | 5.00 | 5.00 | 5.00 |
| Premix (vitamines, minerals, antioxidants ...) | 3.50 | 3.50 | 3.50 |

[1] Equivalent 1.1% dry matter; [2] Equivalent 4.0% dry matter
Crust Hyd: Crustacean hydrolysate

Feed were fed by hand to visual satiety for 60 days (olive flounder) and 84 days (red seabream). At the end of the trial, fish were weighed and zootechnical parameters (survival, growth and feed utilization) were calculated. Then, fish were challenged with a pathogen (*Streptococcus iniae*) and survival checked for 21 days. Results are presented below.

At the end of the trial, the application of liquid crustacean protein hydrolysate concentrate improved significantly the growth performance and feed utilization in both species (Tables 10 and 11 below).

Table 10. Growth performance of olive flounder (*Paralichthys olivaceus*) fed with the experimental diets for 5 weeks (Crustacean hydrolysate: Crust Hydr)

| Treatments | IBW(g) | FBW(g) | SGR(%) | FCR |
|---|---|---|---|---|
| Control (Con) | 24.06±0.24 | 74.75±2.89b | 1.89±0.05b | 1.53±0.02a |

(continued)

| Treatments | IBW(g) | FBW(g) | SGR(%) | FCR |
|---|---|---|---|---|
| Con + 2% Crust Hyd coating | 24.40±0.21 | 86.64±3.69a | 2.1 1±0.06a | 1.32±0.06b |
| Con + 7.2% Crust Hyd inclusion | 24.86±0.42 | 93.12±1.72a | 2.20±0.05a | 1.25±0.02b |

Values are mean of triplicate groups and presented as mean ± S.D.
IBW : initial body weight - FBW: final body weight

Table 11. Growth performance of red seabream *(Pagrus major)* fed with the experimental diets for 6 weeks (Crustacean hydrolysate: Crust Hydr)

| Treatments | IBW(g) | FBW(g) | SGR (%) | FCR |
|---|---|---|---|---|
| Control (Con) | 28.99±0.20 | 102.75±1.43b | 1.51±0.02b | 1.86±0.04a |
| Con+2% Crust Hyd coating | 29.01±0.27 | 112.73±2.27a | 1.62±0.03a | 1.69±0.04b |
| Con + 7.2% Crust Hyd inclusion | 29.03±0.03 | 113.20±3.22a | 1.62±0.03a | 1.70±0.06b |

Values are mean of triplicate groups and presented as mean ± S.D.
IBW : initial body weight - FBW: final body weight

In both species, the mortality rate of fish fed with the control diet increased a lot at the 3rd to 5th day post-challenge to reach a very high level at the end of the challenge period (>80%) (Figs. 16 and 17). On the contrary, the fish fed with the liquid crustacean protein hydrolysate concentrate ("Crust Hyd"), when applied by inclusion, recorded a very high survival along the testing period. This result is a good evidence of the bioactive effect of crustacean protein hydrolysates when fed to fish for a complete diet.

When applied by top-coating, liquid crustacean protein hydrolysate concentrate ("Crust Hyd") gave mitigated results and only the flounder survived well to the bacterial challenge. This last result could allow to conclude that a minimum dietary level of hydrolysate has to be applied to get the best enhancement of fish health status.

**3.3 Other possible applications of crustacean protein hydrolysate in post-larval fish feeds**

The Inventors demonstrated above that crustacean protein hydrolysates are efficient to improve significantly the performance of low fish meal diets which are very stressfull formulations for fish due to their low palatability and low nutrition value. Many other sources of stress could be found during an aquaculture cycle and application of crustacean protein hydrolysates could find their place to reduce stress of fish and so, to improve their resistance to biotic and abiotic factors.

3.3.1 Performance of crustacean protein hydrolysates to recover after a stressing period

A first example regards the stress induced by handling of post-larval fish for weighing, vaccination, transfer, and the like. The main consequence for fish of such handling is a significant reduction of feed intake, leading to a growth reduction. If the anorexic behavior of fish lasts many days, the intestine morphology could be negatively affected: reduction of microvilli surface, enteropathy, mucosal atrophy, etc. (Zeng et al. 2012) and going back to a functional digestive system could take some days. To avoid the negative effects of a prolonged starvation, the main goal is to get a very fast feed recovery to limit the growth retardation and the risk of diseases.

The application of crustacean protein hydrolysates could help to meet this goal. First, the hydrolysates have a palatability-enhancing effect and are thus going to stimulate the post-larval fish feeding behavior. Second, peptides from the hydrolysates could contribute to the development of the digestive system in order to get the best nutrient assimilation and so, the best fish and feed performances.

3.3.2 Performance of crustacean protein hydrolysates to recover after an environmental challenge

Seasonal variations of water temperature and oxygen level are two important parameters that could affect the performance of a fish farm. As post-larval fish are ectothermic, their metabolism is directly related to the water temperature of their breeding environment. Many post-larval fish are grown is cages in sea and suffer changes in environmental parameters along the breeding cycle, which are sources of stress and so, of fish performance deviations between cages or farm or breeding cycles. Crustacean protein hydrolysates could thus also help post-larval fish to become more resistant during these stressful periods by stimulating feed intake and protecting the digestive system.

## 4. Comparative examples

### 4.1 Comparison of the performance of crustacean protein hydrolysates versus fish hydrolysates in post-larval fish

The performance of hydrolysates from different origins was tested in post-larval European seabass to evaluate the impact of the origin of the raw materials on the performance of the resulting hydrolysates. All the raw materials tested were submitted to exactly the same hydrolysis process in terms of enzyme specifications and hydrolysis duration.
Two trials were set up:

- A short duration trial (18 days) to check the short term effect of hydrolysates, mostly driven by their palatability performances (Fig. 18). Hydrolysates were applied by inclusion at 5% on a low fish meal diet (5% fish meal, FM5) and compared a a high fish meal diets (20% fish meal, FM20);
- A long term trial (57 days), to check the long term effect of hydrolysates, mostly driven by their nutritional performances (Fig. 19). Hydrolysates were applied, either by inclusion at 5% or by top-coating at 2%, on a low fish meal diet (5% fish meal, FM5) and compared to a high fish meal diets (20% fish meal, FM20).

In both trials, if the fish hydrolysates were efficient to improve the performance of the low fish meal diet (FM5), they did not allow to recover the performance of the positive control (FM20). The performance of crustacean hydrolysates was significantly higher than the performance of fish-based hydrolysates, reaching at least the performance of the positive control.
These results demonstrate the importance of the raw material origin on the hydrolysate performance, and that crustacean hydrolysates are more relevant and performing than fish hydrolysates to improve the post-larval fish zootechnical characteristics and to restore the performance of low fish meal formula.

### 4.2 Influence of the origin of dietary hydrolysates on their capacities to stimulate the intestine development in post-larval fish

To confirm the performance of hydrolysates from different origins for stimulating the intestine development, another trial was set up in post-larval olive flounder fed salmon or white fish or crustacean hydrolysates for 11 weeks. All the raw materials tested were submitted to exactly the same hydrolysis process in terms of enzyme specifications and hydrolysis duration. Hydrolysate was applied at 3.5% on a low fish meal diet (27.5% fish meal, LFM) and compared to a high fish meal diet (55% fish meal, HFM). At the end of the experiment, anterior intestines (n= 15 per treatment) were sampled for morphometric analysis represented by intestine diameter and villi length. Results are shown in Table 12 below.

Table 12. Intestine diameter and villi length in post-larval olive flounder fed dietary hydrolysates of different origins for 11 weeks (value are mean of 15 analysis)

| | Intestine diameter (μm) | Villi length (μm) |
|---|---|---|
| High fish meal diet (HFM) | 2767±98.0[a] | 913±5.2[a] |
| Low fish meal diet (LFM) | 2576±41.0[b] | 782±24.4[c] |
| LFM + 3.5% shrimp hydrolysate | 2818±97.3[a] | 960±22.7[a] |
| LFM + 3.5% white fish hydrolysate | 2657±154[b] | 829±5.4[b] |
| LFM + 3.5% salmon hydrolysate | 2279±154[c] | 798±16.7[c] |

The dietary fish meal reduction impacted significantly the intestine diameter and the villi length in fish fed the LFM diet compared to the HFM diet. Such deterioration in intestine quality would impact negatively fish and feed performance. The application of shrimp hydrolysate allowed to recover a good intestine quality (comparable to the control diet HFM for intestine diameter and villi length) whereas the white fish meal and the salmon hydrolysate did not. Moreover, the inclusion of salmon hydrolysate impacted negatively the intestine quality compared to the fish fed the negative control (LFM).

These results allowed to conclude on the importance of the raw material origin on the performance of hydrolysates, and that crustacean hydrolysates are more relevant and performing than fish hydrolysates to improve the intestine development and protect from histological negative effects of low fish meal formula.

## REFERENCES

Krogdahl et al. 2003. Effects of graded levels of standard soybean meal on intestinal structure, mucosal enzyme activities, and pancreatic response in Atlantic salmon (Salmo salar L.). Aquaculture Nutrition, 9 (6):361-371.

Guillaume et al. September 2001. Nutrition and Feeding of Fish and Crustaceans. Springer Praxis (UK).

Zeng et al. 2012. The effects of starvation on digestive tract function and structure in juvenile southern catfish (Silurus meridionalis Chen). Comp Biochem Physiol A Mol Integr Physiol. 2012 Jul;162(3):200-11.

Livak and Schmittgen. 2001. Analysis of relative gene expression data using real-time quantitative PCR and the 2(-Delta Delta C(T)) Method. Methods 25(4):402-8.

Schmittgen and Livak. 2008. Analyzing real-time PCR data by the comparative CT method. Nature Protocols 3: 1101 - 1108.

Taheri et al. 2010. The Relationship between different Protein Hydrolysate Diets by Growth, Digestive Enzymes and Resistance to an Aeromonas salmonicida Bacterial Challenge in Rainbow Trout (Oncorhynchus mykiss) Alevine. Volume 2 Number (4).

Cahu et al. 1999. Protein hydrolysate vs. fish meal in compound diets for 10-day old sea bass Dicentrarchus labrax larvae. Aquaculture 171, 109-119.

Koopman et al. 2009. Ingestion of a protein hydrolysate is accompanied by an accelerated in vivo digestion and absorption rate when compared with its intact protein. Am J Clin Nutr. 2009, 90(1):106-15.

Kolkovski, S., 2008. Advances in marine fish larvae diets, in: Cruz-Suárez, E., Ricque, D., Tapia, M., Nieto, M.G., Villarreal, L.D.A., Lazo, J.P., Viana, M.T. (Eds.), Avances en Nutrición Acuícola IX, Universidad Autónoma de Nuevo León, Mexico, Nuevo León, pp. 20-45.

Kendall Jr AW, Ahlstrom EH and Moser HG. 1984. Early life history stages of fishes and their characters. American Society of Ichthyologists and Herpetologists, Special publication 1: 11-22.

Zambonino Infante JL, Cahu CL. 2001. Ontogeny of the gastrointestinal tract of marine fish larvae. Comp Biochem Physiol C Toxicol Pharmacol. 130(4):477-87.

## Claims

**1.** A feed ingredient made of one or more crustacean protein hydrolysates for use in a method for maintaining and/or promoting bowel health of cultured post-larval fish.

**2.** The feed ingredient for use in a method according to claim 1, wherein said crustacean protein hydrolysates comprise:

- free amino acids in an amount from 10 to 60% by weight; and
- an amount of soluble proteins from 70 to 100% relative to the total protein weight of said hydrolysates, wherein said soluble proteins have a profile of distribution in peptide molecular weight as set forth in the table below:

| Peptide molecular weight (MW in Da) | Amount in % of the soluble proteins in the crustacean protein hydrolysates |
|---|---|
| MW < 500 | 50 < % ≤ 5 100 |
| 500 < MW < 1000 | 0 ≤ % < 20 |
| 1000 < MW < 5000 | 0 ≤ % < 20 |
| 5000 < MW < 10000 | 0 ≤ % < 5 |
| MW > 10000 | 0 ≤ % < 5 |

**3.** The feed ingredient for use in a method according to claim 2, wherein said crustacean protein hydrolysates comprise:

- free amino acids in an amount from 12 to 58% by weight; and
- an amount of soluble proteins from 80 to 100% relative to the total protein weight of said hydrolysates, wherein said soluble proteins have a profile of distribution in peptide molecular weight as set forth in the table below:

| Peptide molecular weight (MW in Da) | Amount in % of the soluble proteins in the crustacean protein hydrolysates |
|---|---|
| MW < 500 | 57 < % ≤ 100 |
| 500 < MW < 1000 | 0 ≤ % < 18 |
| 1000 < MW < 5000 | 0 ≤ % < 17 |
| 5000 < MW < 10000 | 0 ≤ % < 4 |
| MW > 10000 | 0 ≤ % < 4 |

**4.** The feed ingredient for use in a method according to anyone of claims 1 to 3, wherein bowel health is maintained and/or promoted in said cultured post-larval fish by improving intestine epithelium development.

**5.** The feed ingredient for use in a method according to anyone of claims 1 to 4, wherein bowel health is maintained and/or promoted in said cultured post-larval fish by enhancing nutrient assimilation by said cultured post-larval fish.

**6.** The feed ingredient for use in a method according to anyone of claims 1 to 5, wherein bowel health is maintained and/or promoted in said cultured post-larval fish by enhancing resistance of said cultured post-larval fish to pathogens.

**7.** The feed ingredient for use in a method according to anyone of claims 1 to 6, wherein said crustacean protein hydrolysates are selected from protein hydrolysates from the following crustacean families: Penaeidae, Palaemonidae, Pandalidae, Galatheidae, Euphausiidae, Mysidae, and Nephropidae

**8.** The feed ingredient for use in a method according to anyone of claims 1 to 7, wherein said crustacean protein hydrolysates are selected from protein hydrolysates from shrimp and krill.

**9.** The feed ingredient for use in a method according to anyone of claims 1 to 8, wherein said cultured post-larval fish is a carnivorous post-larval fish.

## Patentansprüche

**1.** Futterbestandteil, der aus einem oder mehreren Krebstier-Proteinhydrolysaten hergestellt ist, zur Verwendung in einem Verfahren zum Erhalten und/oder Fördern der Darmgesundheit von gezüchtetem Fisch nach dem Larvenstadium.

**2.** Futterbestandteil zur Verwendung in einem Verfahren nach Anspruch 1, wobei die Krebstier-Proteinhydrolysate Folgendes umfassen:

- freie Aminosäuren in einer Menge von 10 bis 60 Gew.-%; und
- eine Menge lösliche Proteine von 70 bis 100 % bezogen auf das Gesamtproteingewicht der Hydrolysate, wobei die löslichen Proteine ein Verteilungsprofil in Peptid-Molekulargewicht aufweisen, wie in der folgenden Tabelle dargelegt:

| Peptid-Molekulargewicht (MW in Da) | Menge der löslichen Proteine in den Krebstier-Proteinhydrolysaten in % |
|---|---|
| MW < 500 | 50 < % ≤ 100 |
| 500 < MW < 1000 | 0 ≤ % < 20 |
| 1000 < MW < 5000 | 0 ≤ % < 20 |
| 5000 < MW < 10000 | 0 ≤ % < 5 |
| MW > 10000 | 0 ≤ % < 5 |

**3.** Futterbestandteil zur Verwendung in einem Verfahren nach Anspruch 2, wobei die Krebstier-Proteinhydrolysate Folgendes umfassen:

- freie Aminosäuren in einer Menge von 12 bis 58 Gew.-%; und
- eine Menge lösliche Proteine von 80 bis 100 % bezogen auf das Gesamtproteingewicht der Hydrolysate, wobei die löslichen Proteine ein Verteilungsprofil in Peptid-Molekulargewicht aufweisen, wie in der folgenden Tabelle dargelegt:

| Peptid-Molekulargewicht (MW in Da) | Menge der löslichen Proteine in den Krebstier-Proteinhydrolysaten in % |
|---|---|
| MW < 500 | 57 < % ≤ 100 |
| 500 < MW < 1000 | 0 ≤ % < 18 |
| 1000 < MW < 5000 | 0 ≤ % < 17 |
| 5000 < MW < 10000 | 0 ≤ % < 4 |
| MW > 10000 | 0 ≤ % < 4 |

**4.** Futterbestandteil zur Verwendung in einem Verfahren nach einem der Ansprüche 1 bis 3, wobei die Darmgesundheit in dem gezüchteten Fisch nach dem Larvenstadium durch Verbesserung der Darmepithelentwicklung erhalten und/oder gefördert wird.

**5.** Futterbestandteil zur Verwendung in einem Verfahren nach einem der Ansprüche 1 bis 4, wobei die Darmgesundheit in dem gezüchteten Fisch nach dem Larvenstadium durch Verbesserung der Nährstoff-Assimilation durch den gezüchteten Fisch nach dem Larvenstadium erhalten und/oder gefördert wird.

**6.** Futterbestandteil zur Verwendung in einem Verfahren nach einem der Ansprüche 1 bis 5, wobei die Darmgesundheit in dem gezüchteten Fisch nach dem Larvenstadium durch Verbesserung der Widerstandsfähigkeit des gezüchteten Fischs nach dem Larvenstadium gegenüber Krankheitserregern erhalten und/oder gefördert wird.

**7.** Futterbestandteil zur Verwendung in einem Verfahren nach einem der Ansprüche 1 bis 6, wobei die Krebstier-Proteinhydrolysate von Proteinhydrolysaten von den folgenden Krebstierfamilien ausgewählt sind: Penaeidae, Palaemonidae, Pandalidae, Galatheidae, Euphausiidae, Mysidae und Nephropidae.

**8.** Futterbestandteil zur Verwendung in einem Verfahren nach einem der Ansprüche 1 bis 7, wobei die Krebstier-Proteinhydrolysate von Proteinhydrolysaten von Shrimp und Krill ausgewählt sind.

**9.** Futterbestandteil zur Verwendung in einem Verfahren nach einem der Ansprüche 1 bis 8, wobei der gezüchtete Fisch nach dem Larvenstadium ein karnivorer Fisch nach dem Larvenstadium ist.

## Revendications

**1.** Ingrédient alimentaire se composant d'un ou plusieurs hydrolysats de protéines de crustacés pour une utilisation dans une méthode destinée à maintenir et/ou favoriser la santé de l'intestin de poissons d'élevage au stade post-larvaire.

**2.** Ingrédient alimentaire pour une utilisation dans une méthode selon la revendication 1, dans lequel lesdits hydrolysats de protéines de crustacés comprennent :

- des acides aminés libres en une quantité de 10 à 60 % en poids ; et
- une quantité de protéines solubles allant de 70 à 100 % par rapport au poids total de protéines desdits hydrolysats, lesdites protéines solubles ayant un profil de distribution, en termes de poids moléculaire peptidique, décrit dans le tableau ci-dessous :

| Poids moléculaire peptidique (PM en Da) | Quantité en % de protéines solubles dans les hydrolysats de protéines de crustacés |
|---|---|
| PM < 500 | 50 < % ≤ 100 |
| 500 < PM < 1 000 | 0 ≤ % < 20 |
| 1 000 < PM < 5 000 | 0 ≤ % < 20 |
| 5 000 < PM < 10 000 | 0 ≤ % < 5 |
| PM > 10 000 | 0 ≤ % < 5 |

**3.** Ingrédient alimentaire pour une utilisation dans une méthode selon la revendication 2, dans lequel lesdits hydrolysats de protéines de crustacés omprennent :

- des acides aminés libres en une quantité de 12 à 58 % en poids ; et
- une quantité de protéines solubles allant de 80 à 100 % par rapport au poids total de protéines desdits hydrolysats, lesdites protéines solubles ayant un profil de distribution, en termes de poids moléculaire peptidique, décrit dans le tableau ci-dessous :

| Poids moléculaire peptidique (PM en Da) | Quantité en % de protéines solubles dans les hydrolysats de protéines de crustacés |
|---|---|
| PM < 500 | 57 < % ≤ 100 |
| 500 < PM < 1 000 | 0 ≤ % < 18 |
| 1 000 < PM < 5 000 | 0 ≤ % < 17 |
| 5 000 < PM < 10 000 | 0 ≤ % < 4 |
| PM > 10 000 | 0 ≤ % < 4 |

**4.** Ingrédient alimentaire pour une utilisation dans une méthode selon l'une quelconque des revendications 1 à 3, dans lequel la santé de l'intestin est maintenue et/ou favorisée dans lesdits poissons d'élevage au stade post-larvaire par l'amélioration du développement de l'épithélium intestinal.

**5.** Ingrédient alimentaire pour une utilisation dans une méthode selon l'une quelconque des revendications 1 à 4, dans lequel la santé de l'intestin est maintenue et/ou favorisée dans lesdits poissons d'élevage au stade post-larvaire par l'amélioration de l'assimilation de nutriments par lesdits poissons d'élevage au stade post-larvaire.

**6.** Ingrédient alimentaire pour une utilisation dans une méthode selon l'une quelconque des revendications 1 à 5, dans lequel la santé de l'intestin est maintenue et/ou favorisée dans lesdits poissons d'élevage au stade post-larvaire par l'amélioration de la résistance desdits poissons d'élevage au stade post-larvaire vis-à-vis de pathogènes.

**7.** Ingrédient alimentaire pour une utilisation dans une méthode selon l'une quelconque des revendications 1 à 6, dans lequel lesdits hydrolysats de protéines de crustacés sont choisis parmi les hydrolysats de protéines provenant des familles de crustacés suivantes : Penaeidae, Palaemonidae, Pandalidae, Galatheidae, Euphausiidae, Mysidae et Nephropidae.

**8.** Ingrédient alimentaire pour une utilisation dans une méthode selon l'une quelconque des revendications 1 à 7, dans lequel lesdits hydrolysats de protéines de crustacés sont choisis parmi les hydrolysats de protéine de crevettes et de krill.

**9.** Ingrédient alimentaire pour une utilisation dans une méthode selon l'une quelconque des revendications 1 à 8, dans lequel lesdits poissons d'élevage au stade post-larvaire sont des poissons carnivores au stade post-larvaire.

Figure 1

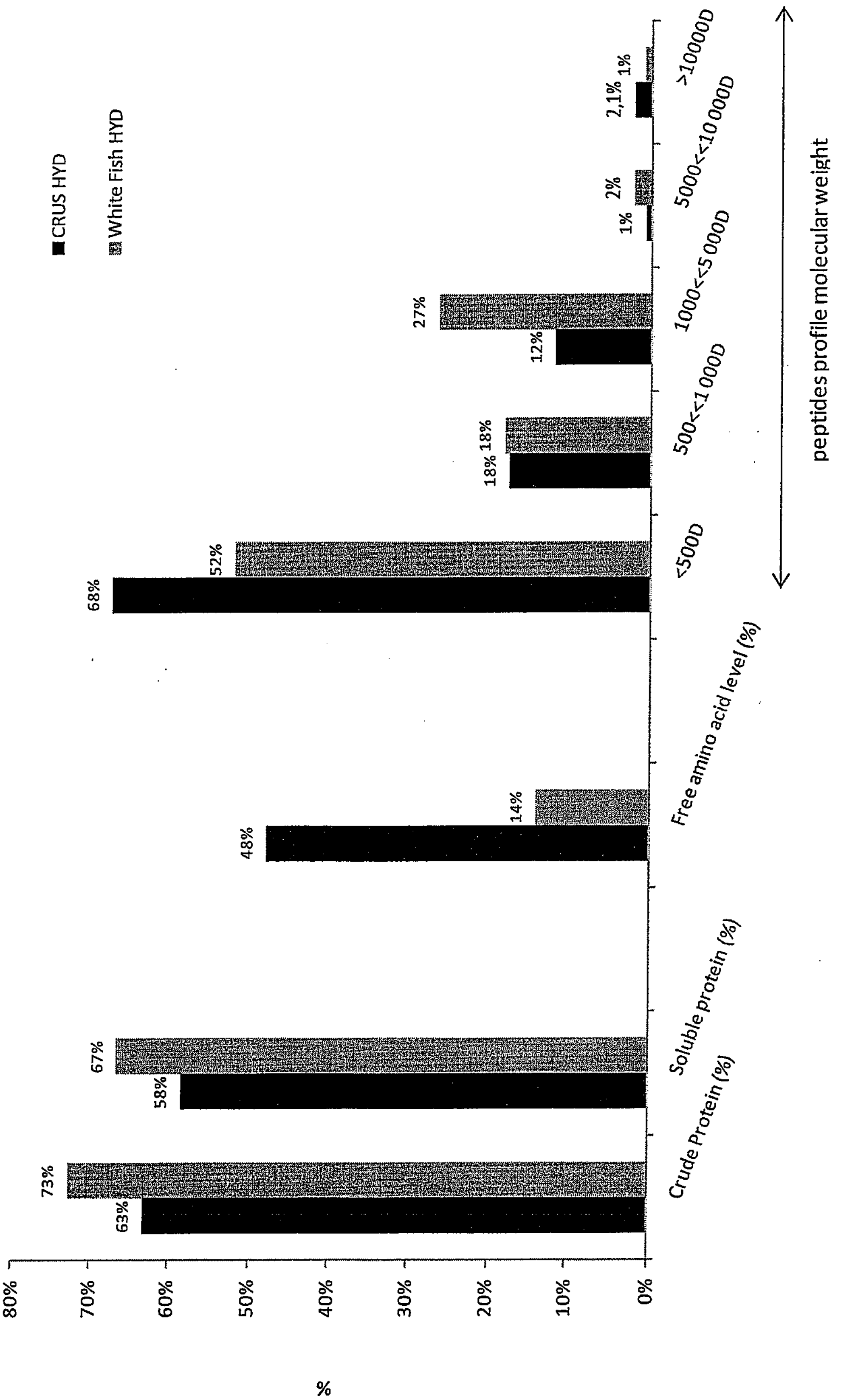
CRUS HYD
White Fish HYD
%
0%
10%
20%
30%
40%
50%
60%
70%
80%
Crude Protein (%)
Soluble protein (%)
Free amino acid level (%)
<500D
500<<1 000D
1000<<5 000D
5000<<10 000D
>10000D
peptides profile molecular weight
63%
73%
58%
67%
48%
14%
68%
52%
18%
18%
12%
27%
1%
2%
2,1%
1%

Figure 2

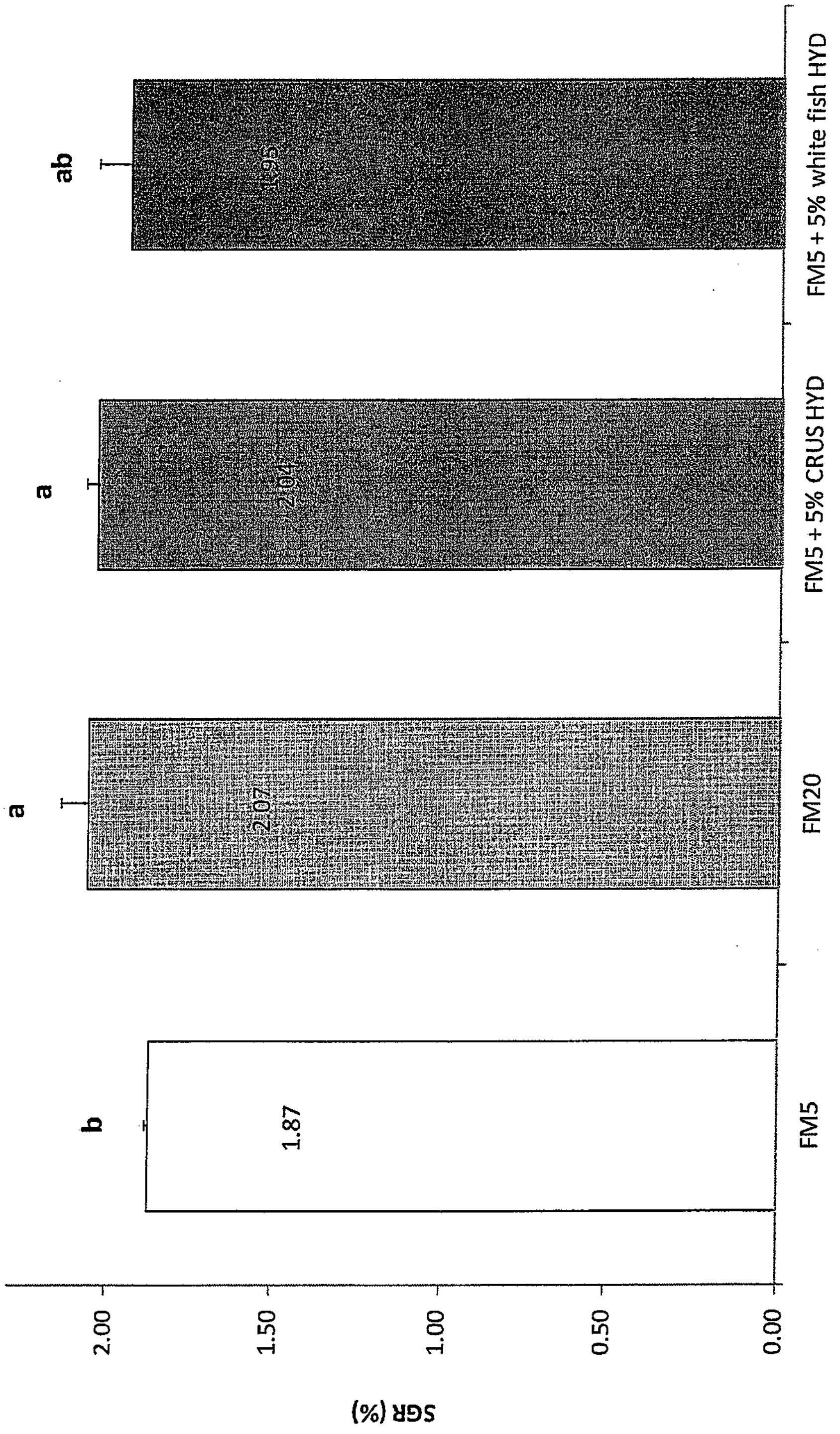
SGR (%)
2.00
1.50
1.00
0.50
0.00
b
1.87
FM5
a
2.07
FM20
a
2.04
FM5 + 5% CRUS HYD
ab
1.95
FM5 + 5% white fish HYD

Figure 3

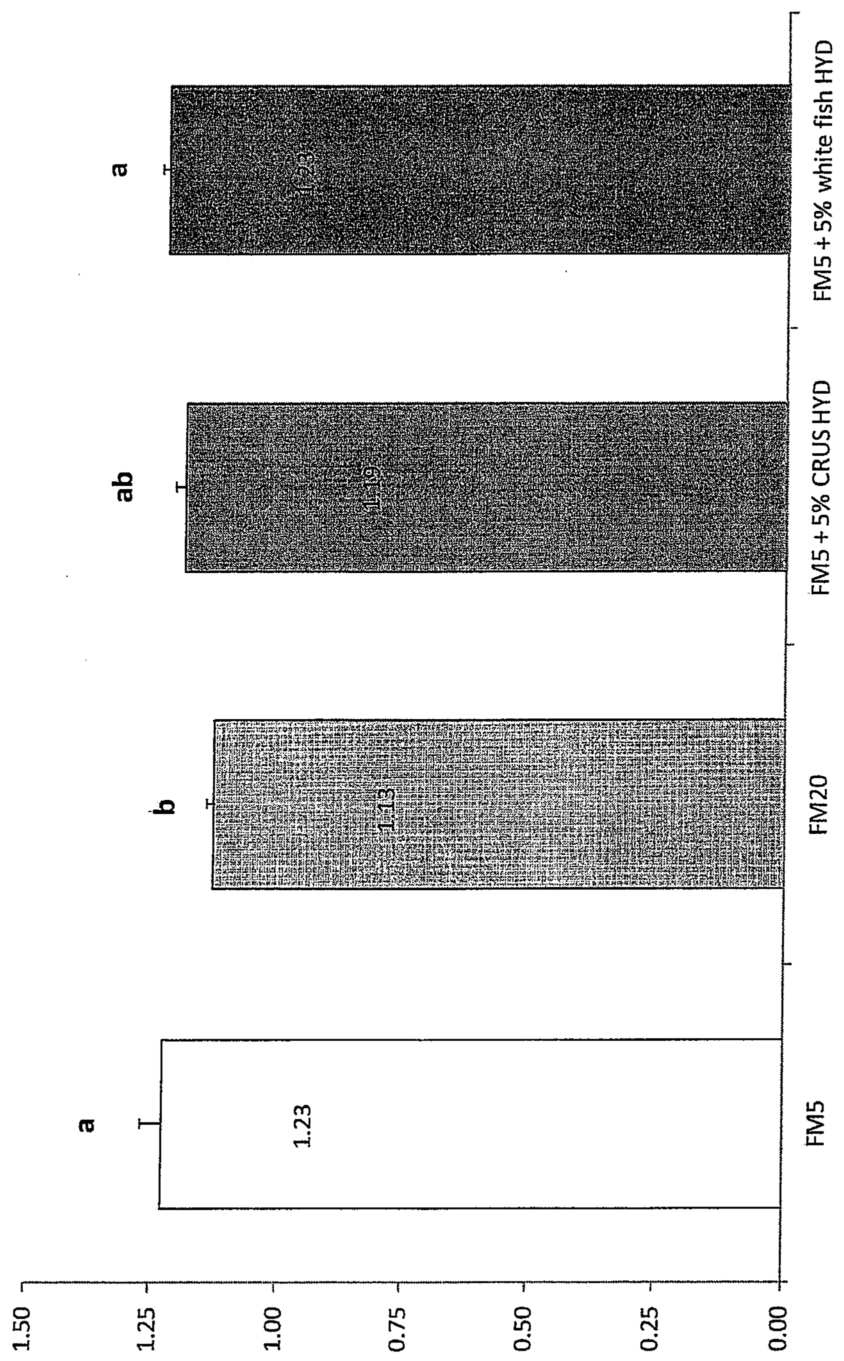
FCR
1.50
1.25
1.00
0.75
0.50
0.25
0.00
a
1.23
FM5
b
1.13
FM20
ab
1.19
FM5 + 5% CRUS HYD
a
1.23
FM5 + 5% white fish HYD

Figure 4

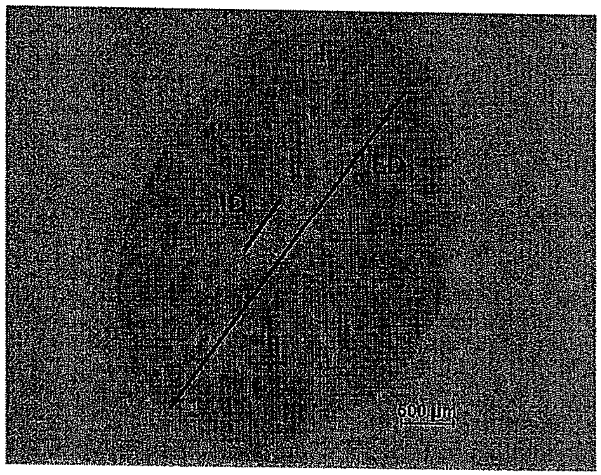


Figure 5

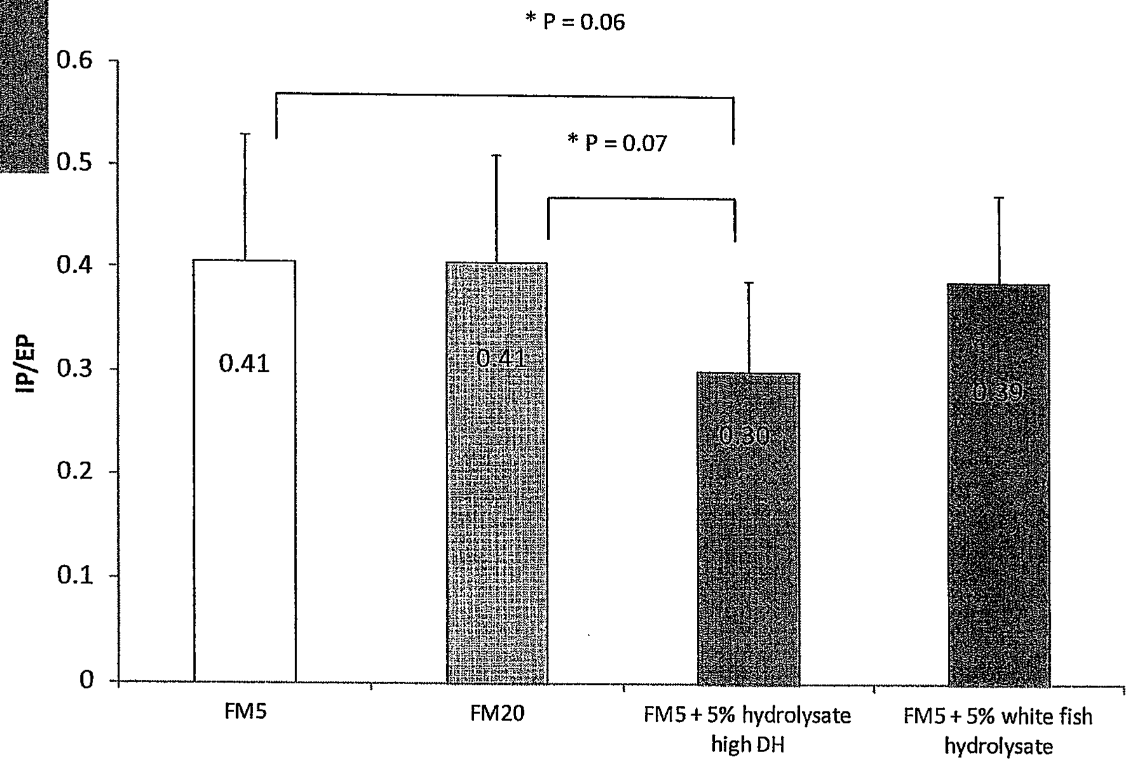

Figure 5b

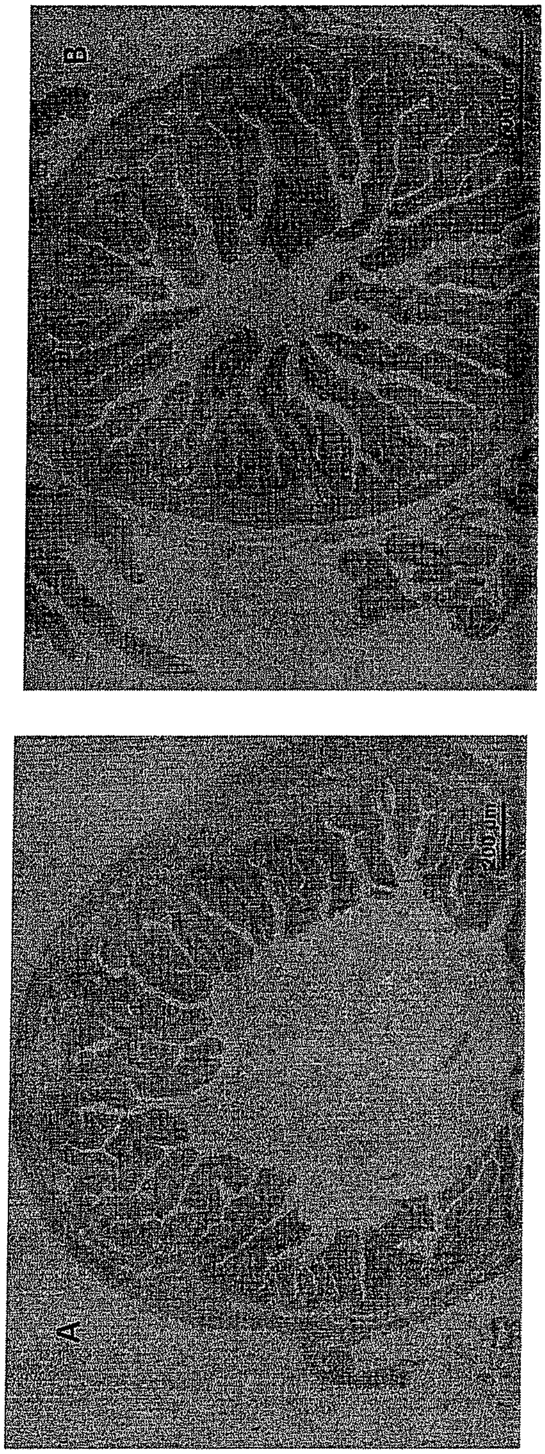

Figure 6

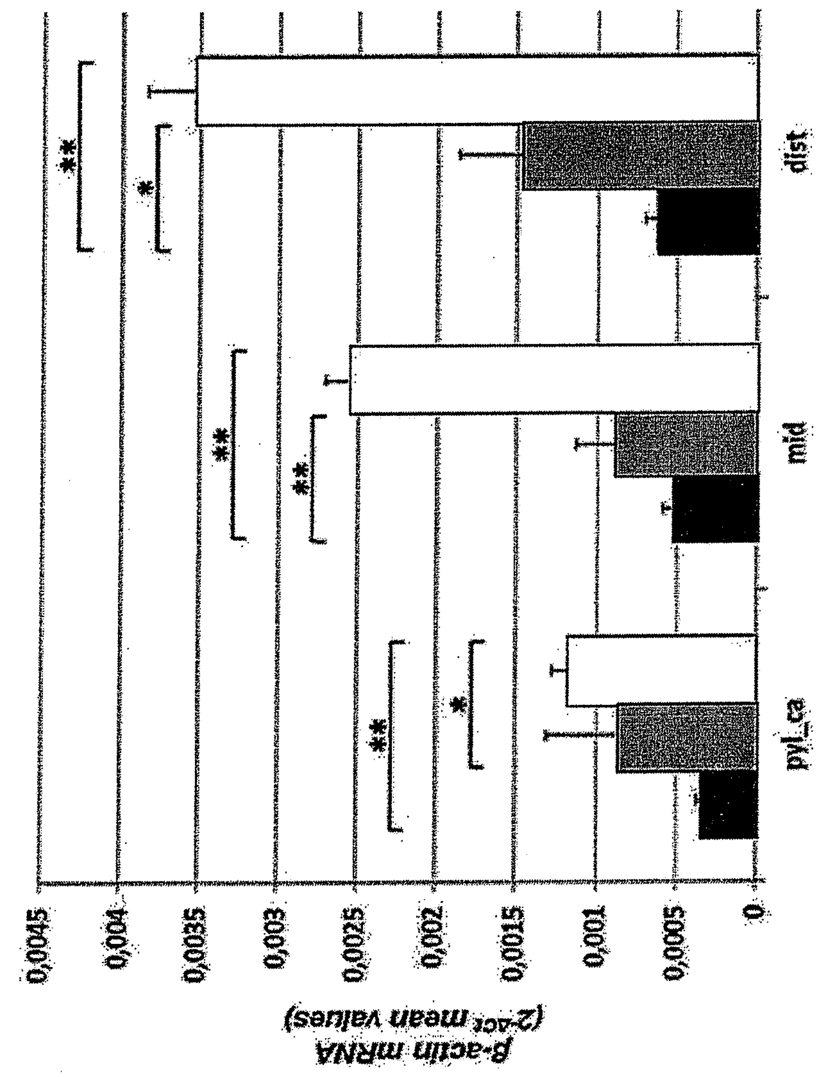


FM5 ( ), FM20 ( ), and FM5 + 5% crustacean hydrolysate hydrolyste ( )

Figure 7

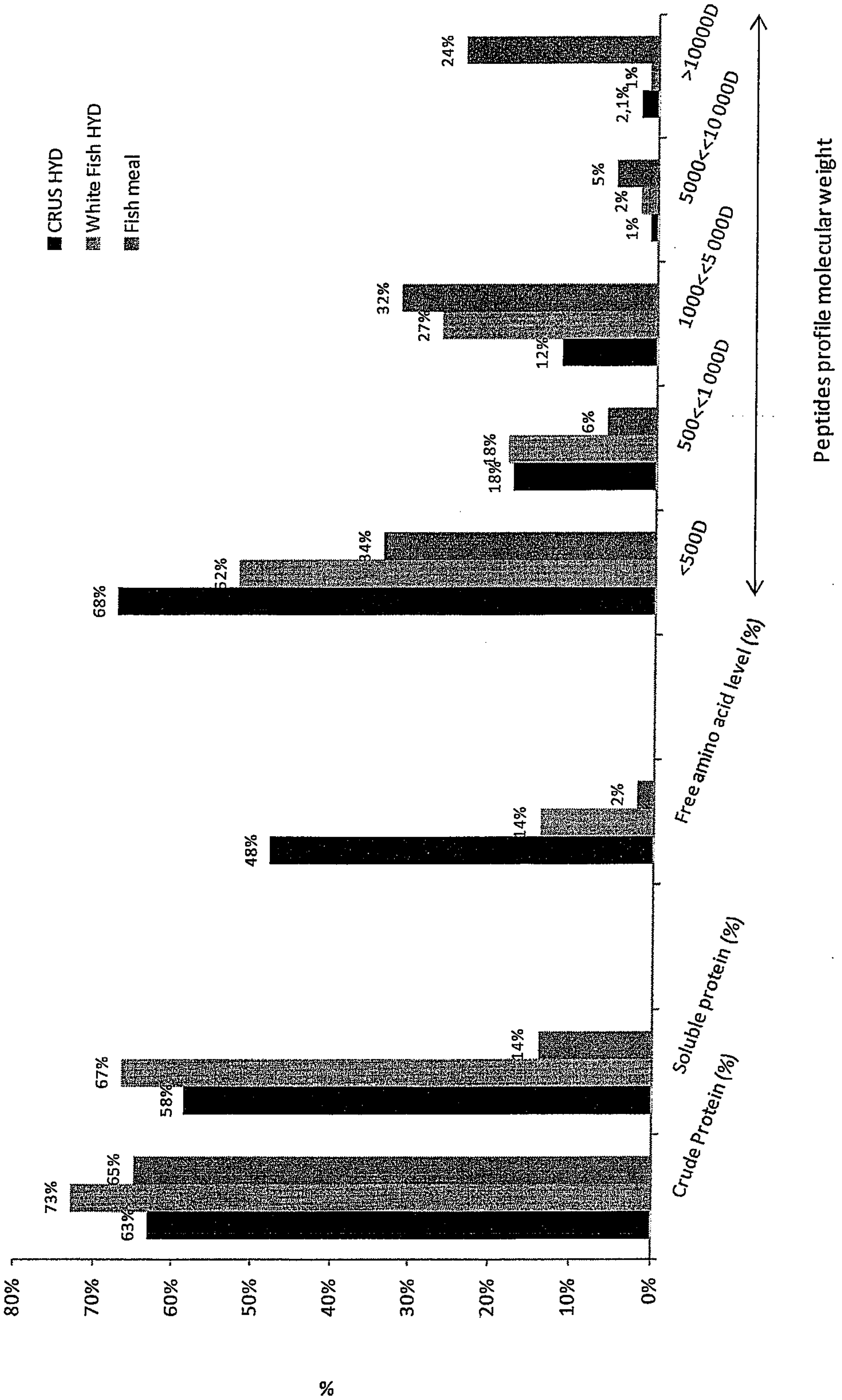
CRUS HYD
White Fish HYD
Fish meal
%
80%
70%
60%
50%
40%
30%
20%
10%
0%
63%
73%
65%
58%
67%
14%
48%
14%
2%
68%
52%
34%
18%
18%
6%
12%
27%
32%
1%
2%
5%
2,1%
1%
24%
Crude Protein (%)
Soluble protein (%)
Free amino acid level (%)
<500D
500<<1 000D
1000<<5 000D
5000<<10 000D
>10000D
Peptides profile molecular weight

Figure 8

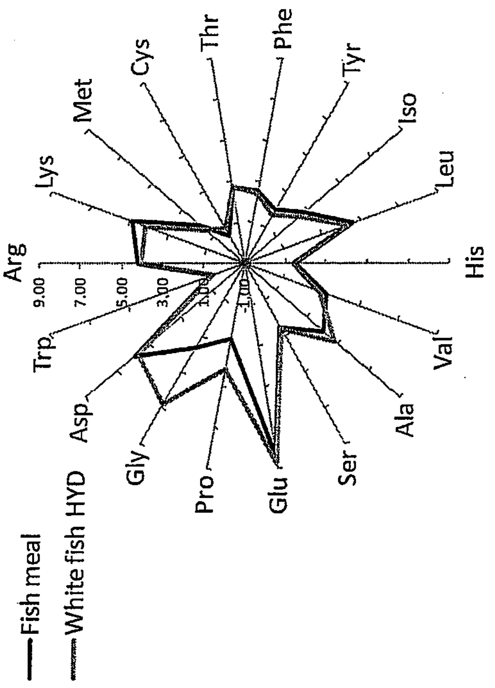
Fish meal
White fish HYD
Arg
Lys
Met
Cys
Thr
Phe
Tyr
Iso
Leu
His
Val
Ala
Ser
Glu
Pro
Gly
Asp
Trp
9.00
7.00
5.00
3.00
1.00
-1.00

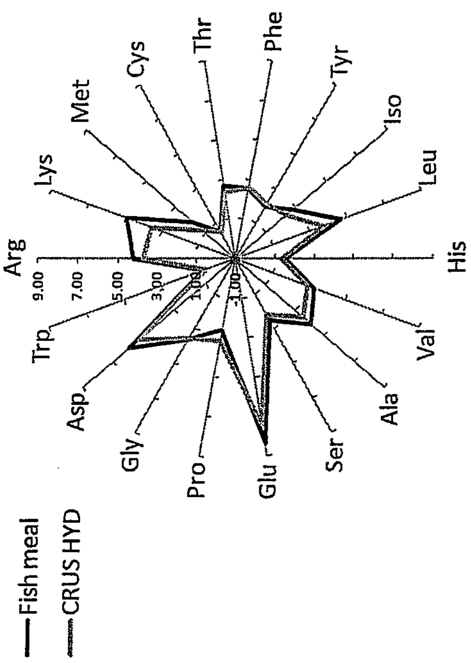
Fish meal
CRUS HYD
Arg
Lys
Met
Cys
Thr
Phe
Tyr
Iso
Leu
His
Val
Ala
Ser
Glu
Pro
Gly
Asp
Trp
9.00
7.00
5.00
3.00
1.00
-1.00

Figure 9

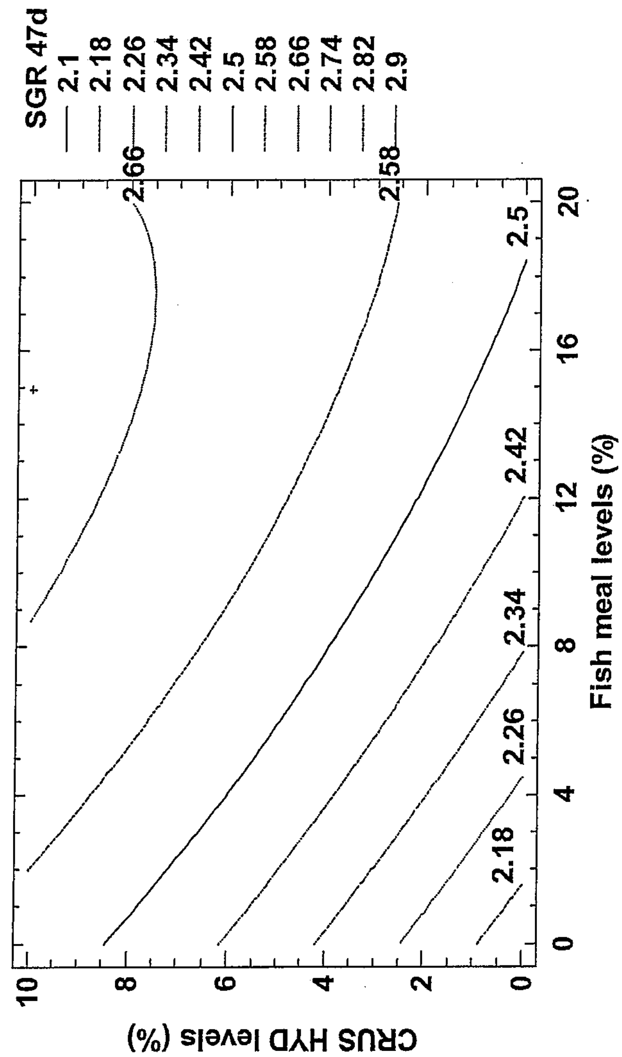
SGR 47d
2.1
2.18
2.26
2.34
2.42
2.5
2.58
2.66
2.74
2.82
2.9
CRUS HYD levels (%)
Fish meal levels (%)
0
2
4
6
8
10
0
4
8
12
16
20
2.18
2.26
2.34
2.42
2.5
2.58
2.66

Figure 10

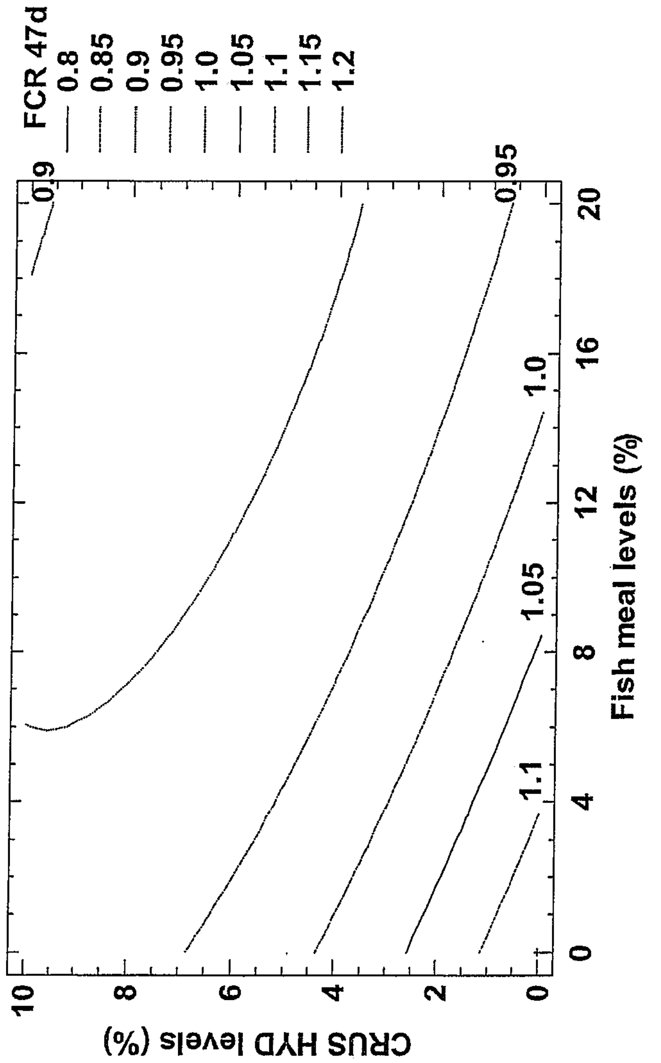
FCR 47d
0.8
0.85
0.9
0.95
1.0
1.05
1.1
1.15
1.2
CRUS HYD levels (%)
Fish meal levels (%)
0.9
0.95
1.0
1.05
1.1
0
2
4
6
8
10
0
4
8
12
16
20

Figure 11

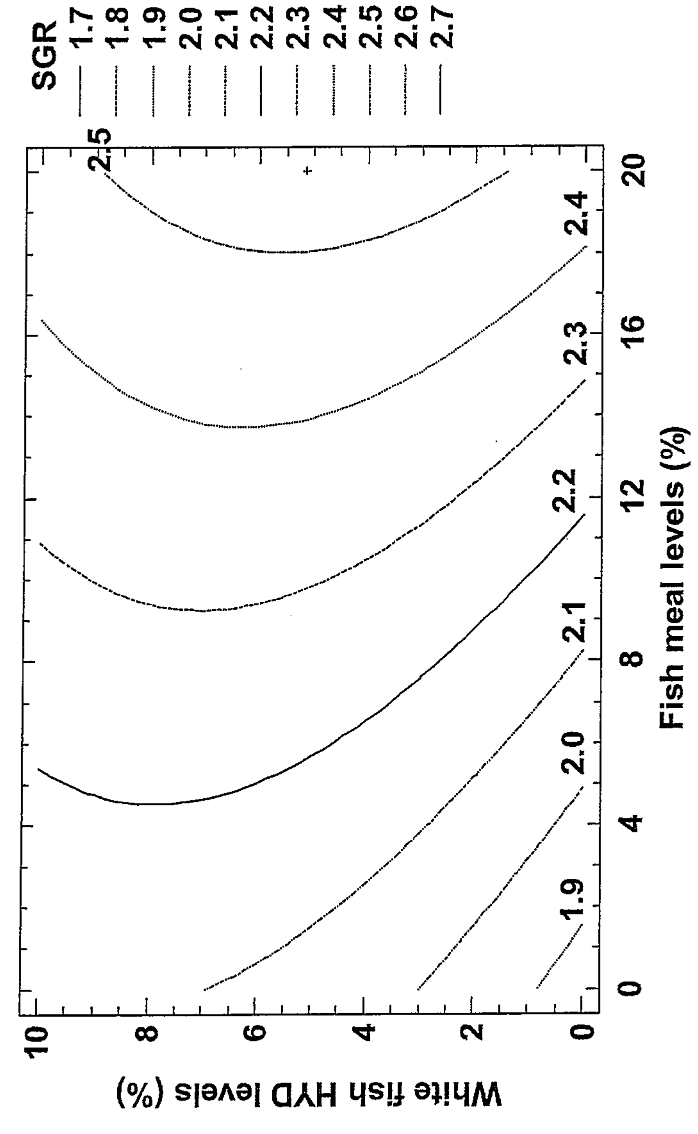
SGR
1.7
1.8
1.9
2.0
2.1
2.2
2.3
2.4
2.5
2.6
2.7
White fish HYD levels (%)
Fish meal levels (%)
0
4
8
12
16
20
0
2
4
6
8
10

Figure 12

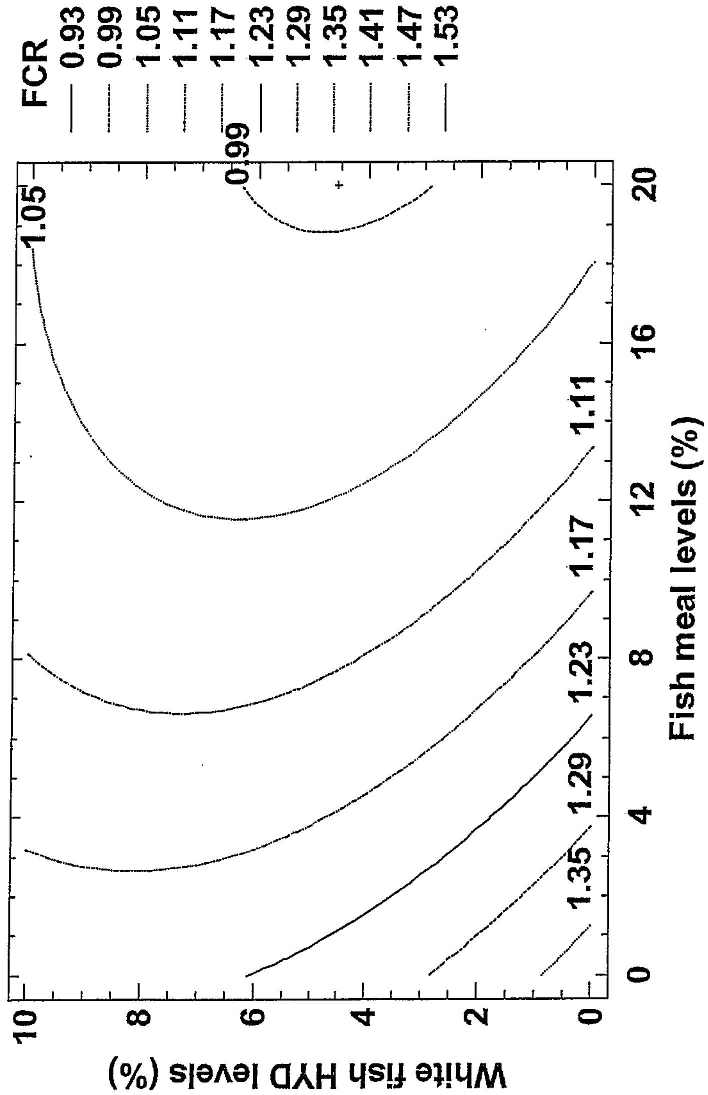
FCR
0.93
0.99
1.05
1.11
1.17
1.23
1.29
1.35
1.41
1.47
1.53
White fish HYD levels (%)
Fish meal levels (%)
0
2
4
6
8
10
0
4
8
12
16
20
1.05
0.99
1.11
1.17
1.23
1.29
1.35

Figure 13

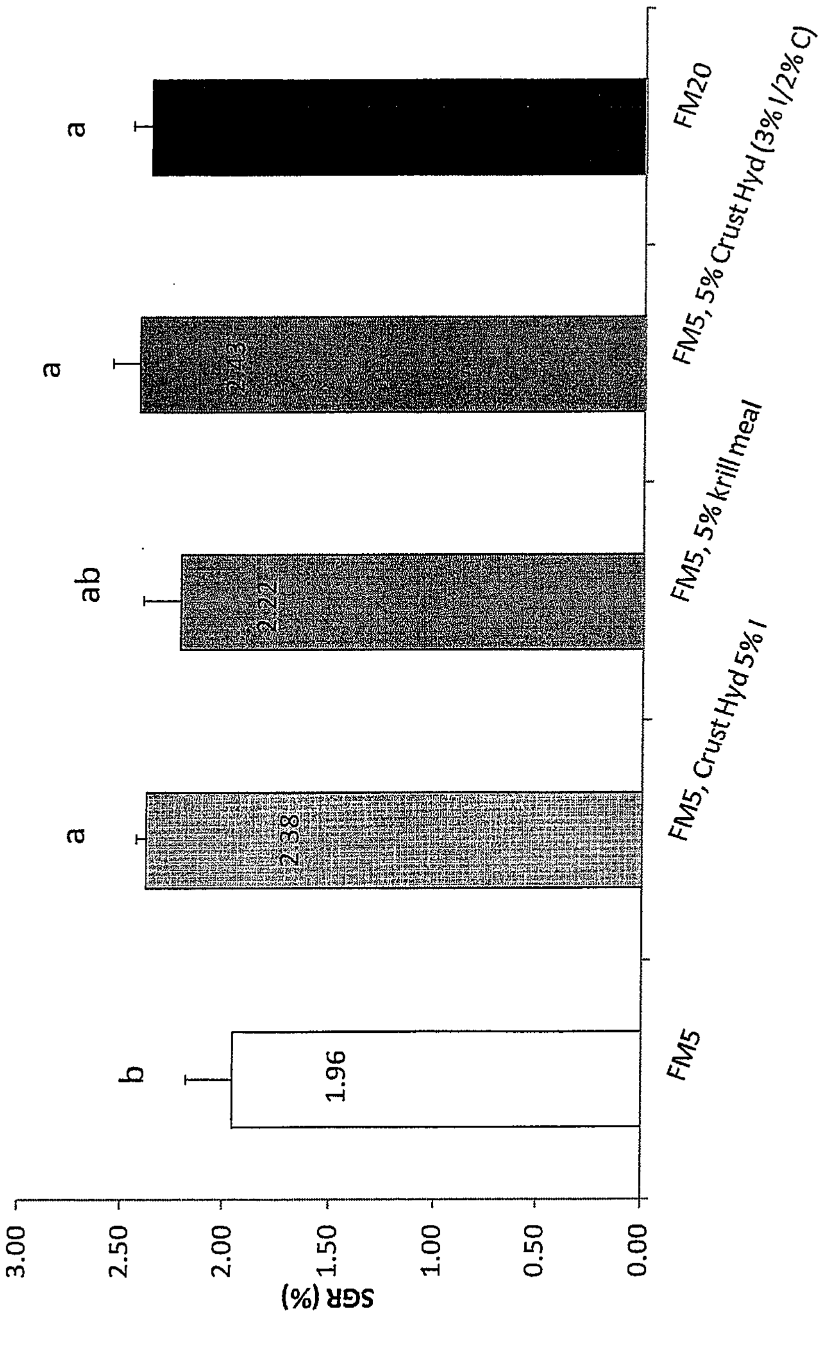
SGR (%)
3.00
2.50
2.00
1.50
1.00
0.50
0.00
b
1.96
a
2.38
ab
2.22
a
2.43
a
FM5
FM5, Crust Hyd 5% I
FM5, 5% krill meal
FM5, 5% Crust Hyd (3% I/2% C)
FM20

Figure 14

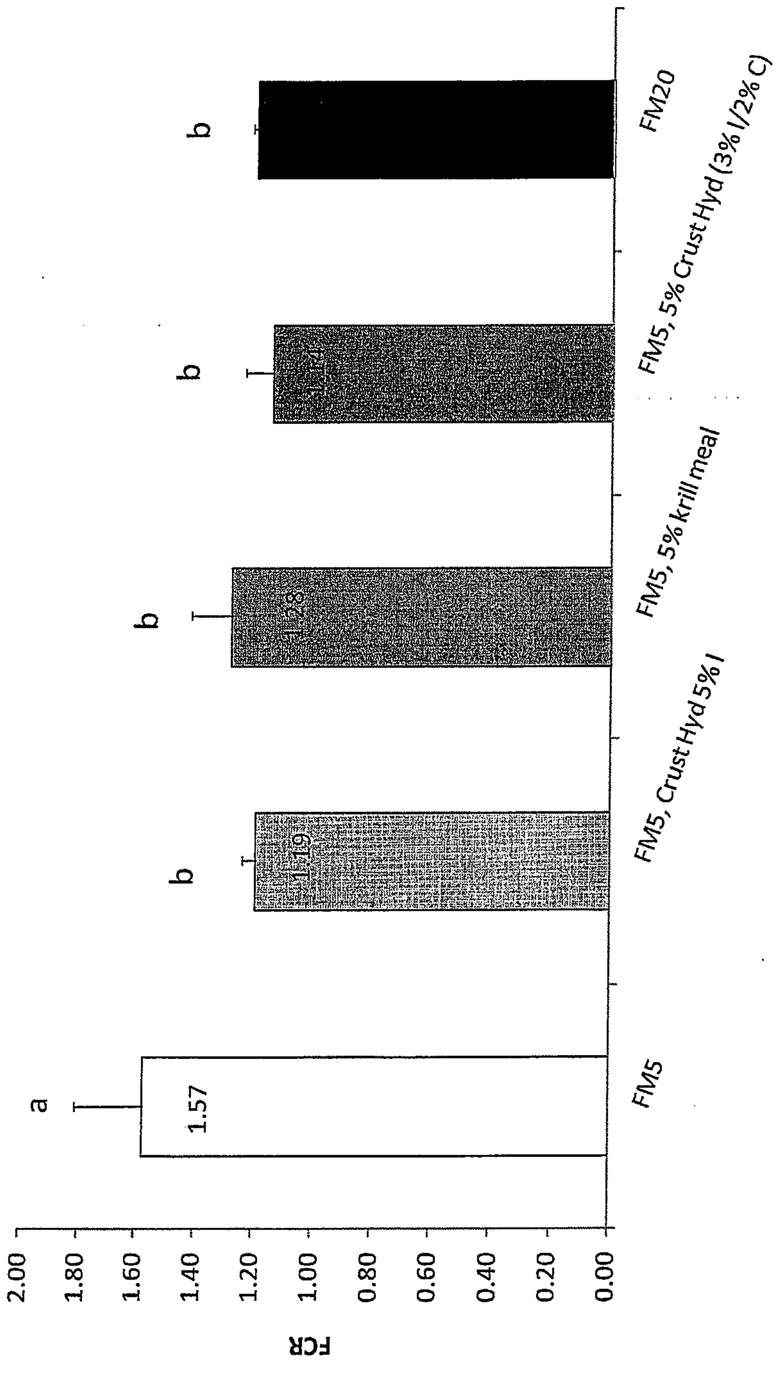
FCR
2.00
1.80
1.60
1.40
1.20
1.00
0.80
0.60
0.40
0.20
0.00
a
1.57
b
1.19
b
1.28
b
1.14
b
FM5
FM5, Crust Hyd 5% I
FM5, 5% krill meal
FM5, 5% Crust Hyd (3% I/2% C)
FM20

Figure 15

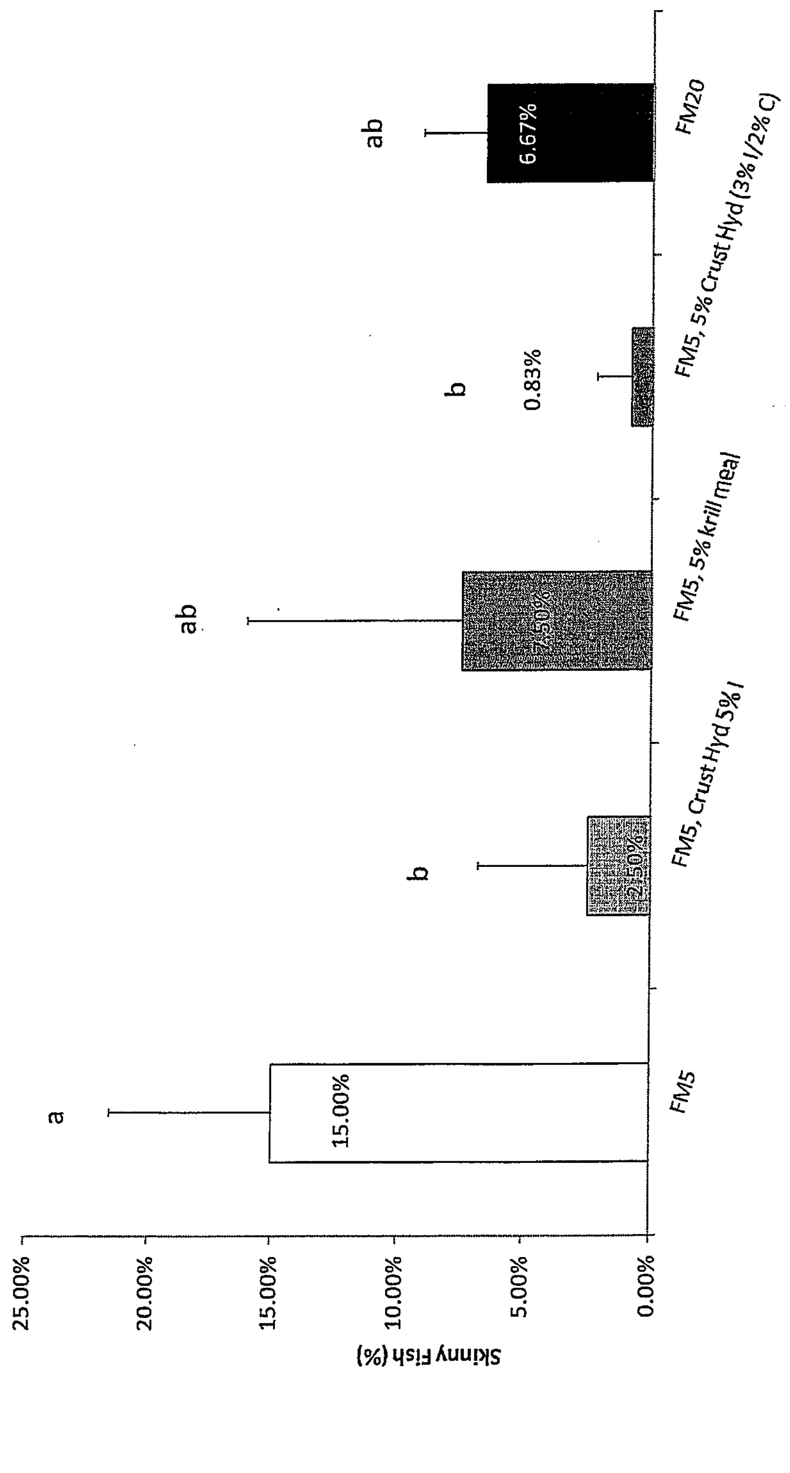
Skinny Fish (%)
25.00%
20.00%
15.00%
10.00%
5.00%
0.00%
a
15.00%
b
2.50%
ab
7.50%
b
0.83%
ab
6.67%
FM5
FM5, Crust Hyd 5% I
FM5, 5% krill meal
FM5, 5% Crust Hyd (3% I/2% C)
FM20

Figure 16

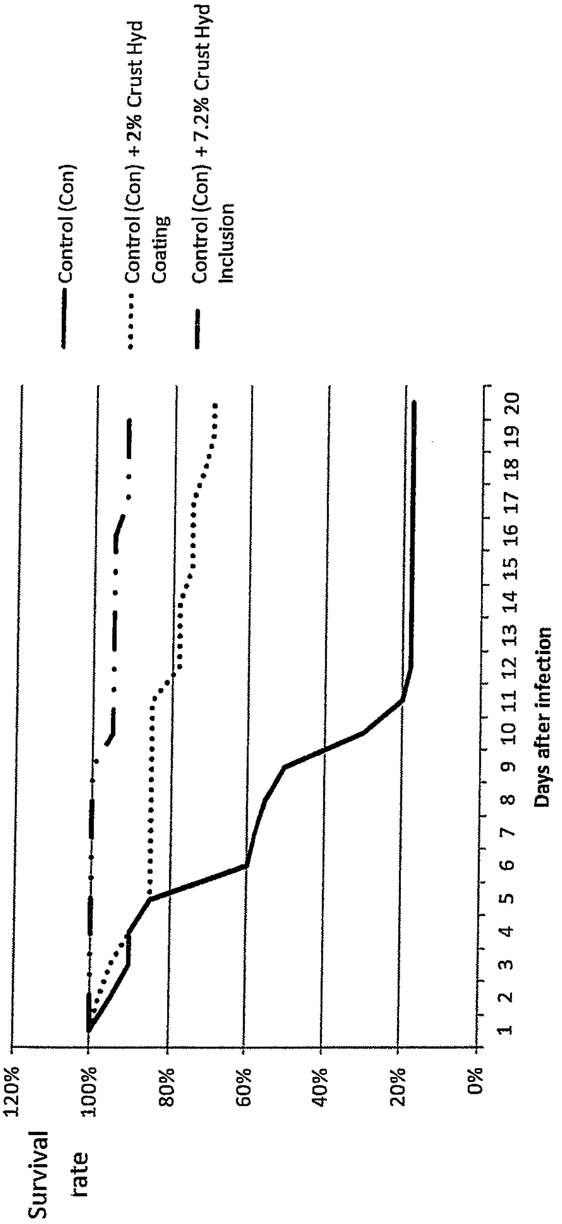


Figure 17

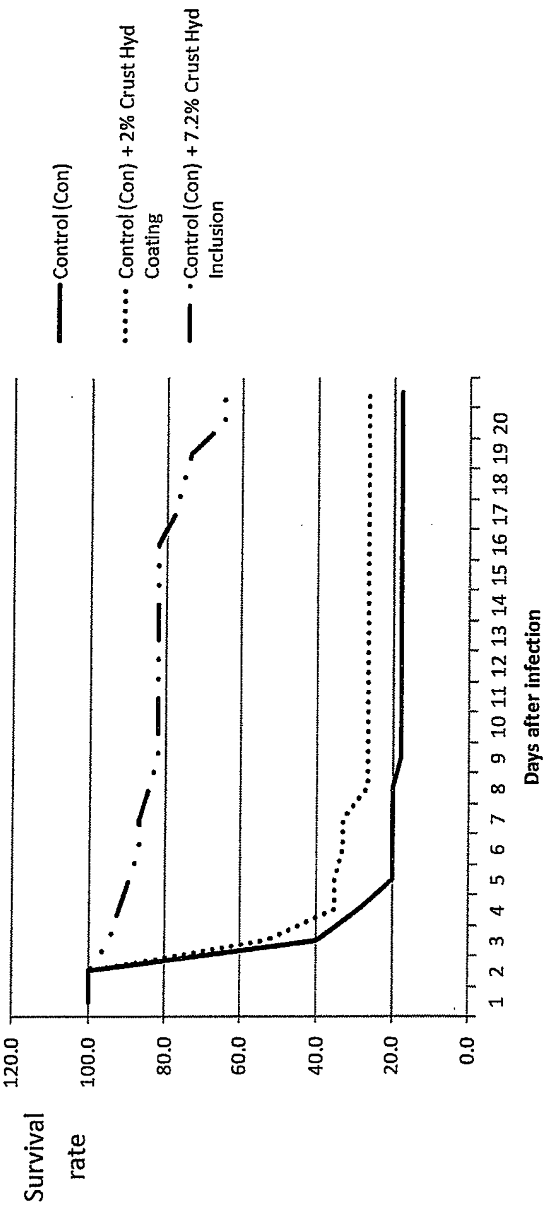

Figure 18

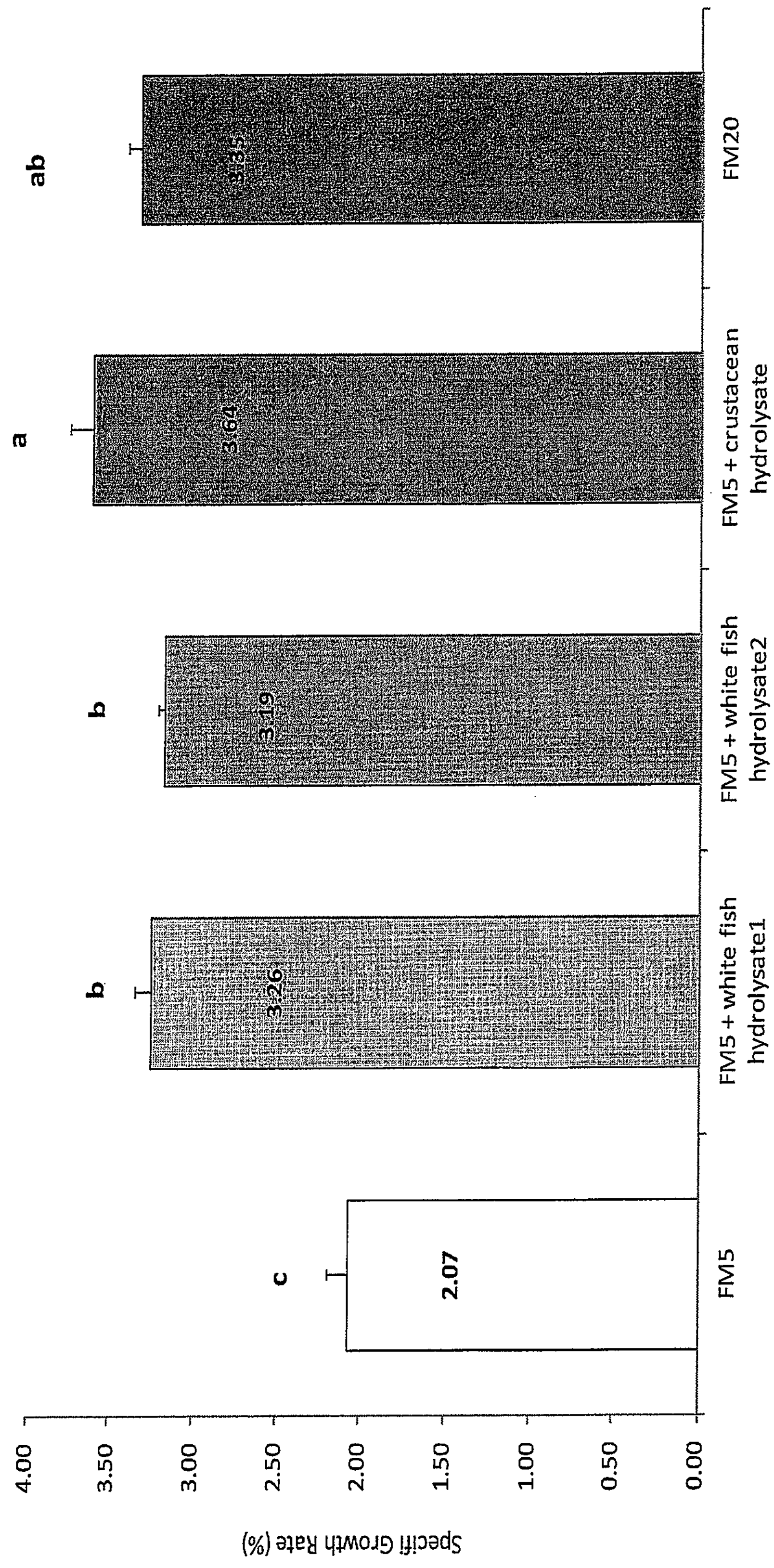
Specifi Growth Rate (%)
0.00
0.50
1.00
1.50
2.00
2.50
3.00
3.50
4.00
FM5
2.07
c
FM5 + white fish hydrolysate1
3.26
b
FM5 + white fish hydrolysate2
3.19
b
FM5 + crustacean hydrolysate
3.64
a
FM20
3.35
ab

Figure 19

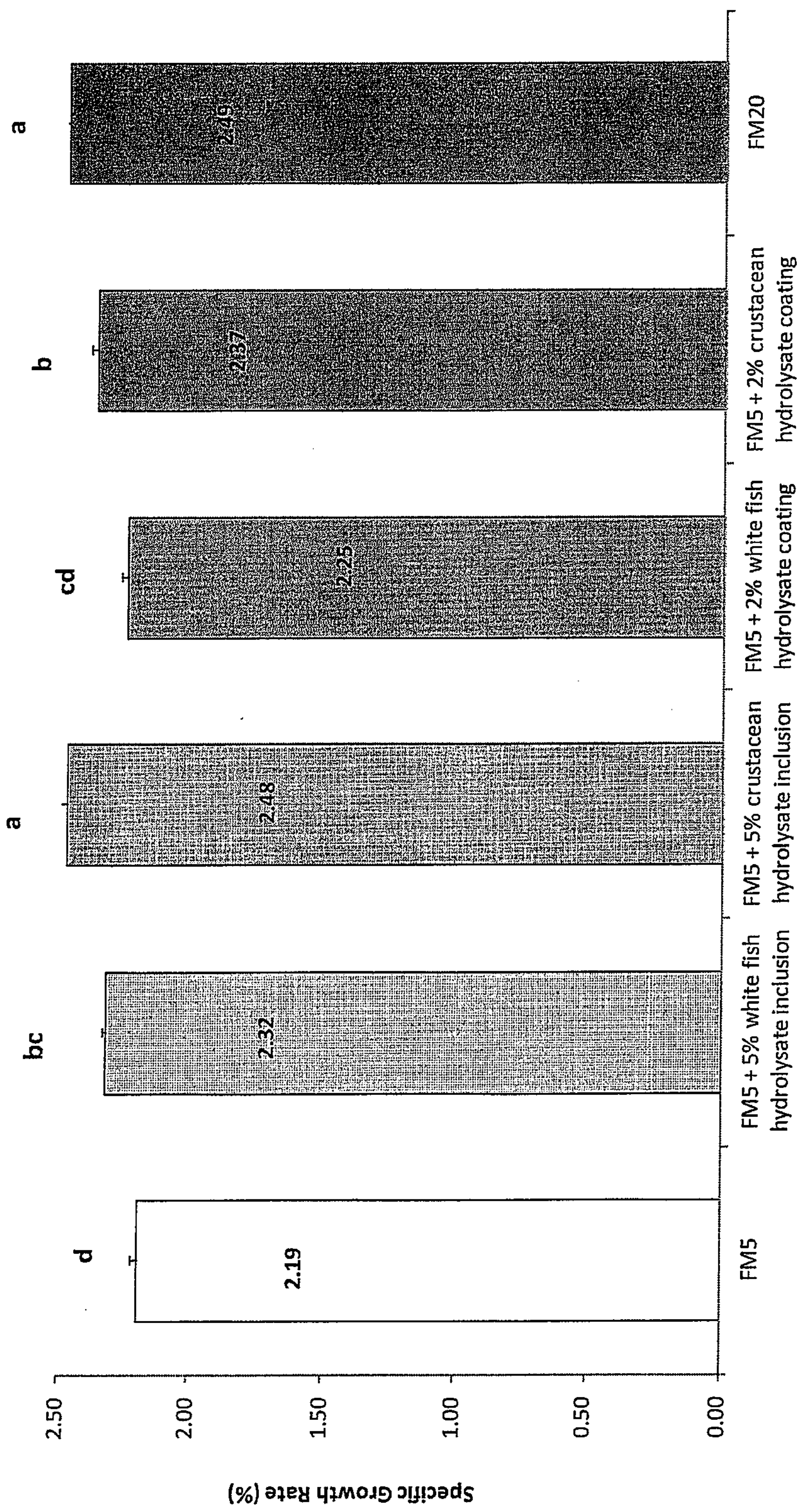
Specific Growth Rate (%)
0.00
0.50
1.00
1.50
2.00
2.50
d
2.19
bc
2.32
a
2.48
cd
2.25
b
2.37
a
2.49
FM5
FM5 + 5% white fish hydrolysate inclusion
FM5 + 5% crustacean hydrolysate inclusion
FM5 + 2% white fish hydrolysate coating
FM5 + 2% crustacean hydrolysate coating
FM20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **KROGDAHL et al.** Effects of graded levels of standard soybean meal on intestinal structure, mucosal enzyme activities, and pancreatic response in Atlantic salmon (Salmo salar L.). *Aquaculture Nutrition,* 2003, vol. 9 (6), 361-371
- **GUILLAUME et al.** Nutrition and Feeding of Fish and Crustaceans. Springer Praxis, September 2001
- **ZENG et al.** The effects of starvation on digestive tract function and structure in juvenile southern catfish (Silurus meridionalis Chen). *Comp Biochem Physiol A Mol Integr Physiol.,* July 2012, vol. 162 (3), 200-11
- **LIVAK ; SCHMITTGEN.** Analysis of relative gene expression data using real-time quantitative PCR and the 2(-Delta Delta C(T)) Method. *Methods,* 2001, vol. 25 (4), 402-8
- **SCHMITTGEN ; LIVAK.** Analyzing real-time PCR data by the comparative CT method. *Nature Protocols,* 2008, vol. 3, 1101-1108
- **TAHERI et al.** The Relationship between different Protein Hydrolysate Diets by Growth, Digestive Enzymes and Resistance to an Aeromonas salmonicida. *Bacterial Challenge in Rainbow Trout (Oncorhynchus mykiss) Alevine,* 2010, vol. 2 (4
- **CAHU et al.** Protein hydrolysate vs. fish meal in compound diets for 10-day old sea bass Dicentrarchus labrax larvae. *Aquaculture,* 1999, vol. 171, 109-119
- **KOOPMAN et al.** Ingestion of a protein hydrolysate is accompanied by an accelerated in vivo digestion and absorption rate when compared with its intact protein. *Am J Clin Nutr.,* 2009, vol. 90 (1), 106-15
- Advances in marine fish larvae diets. **KOLKOVSKI, S.** Avances en Nutrición Acuícola IX. Universidad Autónoma de Nuevo León, 2008, 20-45
- **KENDALL JR AW ; AHLSTROM EH ; MOSER HG.** Early life history stages of fishes and their characters. *American Society of Ichthyologists and Herpetologists,* 1984, vol. 1, 11-22
- **ZAMBONINO INFANTE JL ; CAHU CL.** Ontogeny of the gastrointestinal tract of marine fish larvae. *Comp Biochem Physiol C Toxicol Pharmacol.,* 2001, vol. 130 (4), 477-87